# EUROPEAN PATENT APPLICATION

(11) **EP 1 657 832 A1**
(43) Date of publication of application: **17.05.2006**
(21) Application number: 04771901.8
(22) Date of filing: 13.08.2004
(51) Int. Cl.: H04B 7/26, H04J 13/00

(54) **RADIO COMMUNICATION METHOD, RADIO COMMUNICATION SYSTEM, RADIO BASE STATION APPARATUS, AND COMMUNICATION TERMINAL APPARATUS**

(30) Priority: 22.08.2003 JP 2003299122
(71) Applicant: MATSUSHITA ELECTRIC INDUSTRIAL CO., LTD., Kadoma-shi, Osaka 571-8501 (JP)
(72) Inventor: UEHARA, Toshiyuki, Yokohama-shi, Kanagawa 232-0011 (JP); NAKA, Katsuyoshi, Yokosuka-shi, Kanagawa 239-0807 (JP); NISHIO, Akihiko, Yokosuka-shi, Kanagawa 239-0846 (JP); MIYOSHI, Kenichi, Yokohama-shi, Kanagawa 236-0058 (JP)
(74) Representative: Grünecker, Kinkeldey, Stockmair & Schwanhäusser Anwaltssozietät
(86) International application number: PCT/JP2004/011940
(87) International publication number: WO 2005/020469

(57) **Abstract**

A radio communication method is provided that enables the TFC pointer of a communication terminal apparatus to be made to match the TFC pointer of a radio base station apparatus. Amobile station changes its TFC pointer in line with a determined TFC and also transmits a TFCI at point in time t3. The base station checks the TFCI and updates its own TFC pointer so as to match with the TFC indicated by the TFCI. The base station determines a new TFC pointer, generates an up/down/keep signal by comparing the new TFC pointer with the updated TFC pointer, and transmits this signal at point in time t5. The mobile station updates the TFC pointer it is holding based on the up/down/keep signal received at point in time t6. As a result, the TFC pointers of both stations can be made to match even if the mobile station receives an up/down/keep signal erroneously at point in time t2.

## Description

### Technical Field

The present invention relates to a radio communication method, radio communication system, radio base station apparatus, and communication terminal apparatus that determine a transmission rate at which transmission is possible by a communication terminal apparatus using a TFC (Transport Format Combination) pointer in particular.

### Background Art

In recent years, various techniques have been proposed for implementing high-speed uplink packet transmission from a communication terminal apparatus (hereinafter referred to in some cases as "mobile station") to a radio base station apparatus (hereinafter referred to in some cases as "base station"). In this high speed uplink packet transmission, packet data transmission rate control is important in order to improve the throughput of transmission data.

At present, this transmission rate control is performed by controlling parameters such as the physical channel symbol rate, coding rate, rate matching, and DTX (Discontinuous Transmission). Transmission rate switching can be performed at the start of communication or during communication, and is implemented by defining a plurality of channel combinations for each transmission rate determined by the aforementioned parameters, assigning a number to each combination, and switching that number during communication. Such a combination of parameters is called a TFC (Transport Format Combination).

This TFC will now be described briefly. In a radio communication system, when the total communication terminal apparatus transmission power exceeds the maximum transmission power, it is necessary to perform control to stop transmission or lower the transmission rate, etc., of one of the channels, so that the total transmission power does not exceed the maximum transmission power. In the W-CDMA 3GPP Release 99 specifications, TFC Selection is standardized as the method of achieving this.

With TFC Selection, when a communication terminal apparatus transmits data multiplexed on a plurality of Dedicated Channels (DCHs), it is determined whether or not the total transmission power exceeds the maximum transmission power for each TFC, which is a Transport Format Combination indicating the amount of data transmitted by each DCH, etc., and a TFC capable of transmission is selected. In the following description, a collection of all TFCs is called a TFCS (Transport Format Combination Set) .

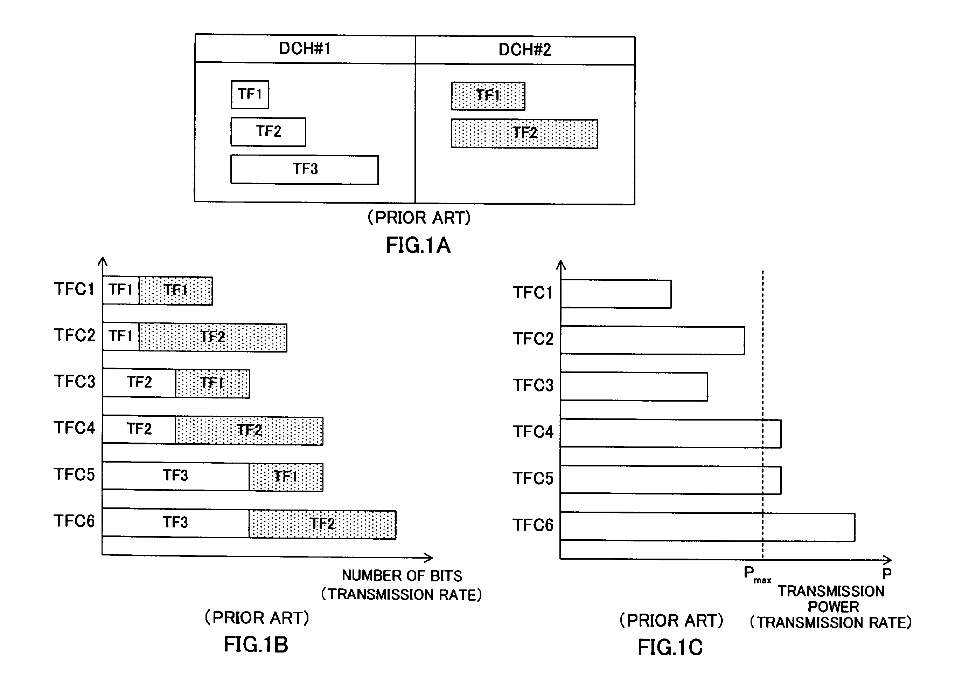

TFC Selection will now be described in concrete terms using FIG. 1A through FIG. 1C. FIG.1A shows a case in which there are two DCHs, there are three transport formats TF in DCH#1, and there are two transport formats TF in DCH#2. In this case, there are six kinds of TFC - TFC1 through TFC6 - as shown in FIG. 1B. In FIG. 1A and FIG. 1B, the number of bits (transmission rate) of each transport formats TF is indicated by the length of the horizontal axis.

Here, it is necessary to speed up the transmission rate in proportion as the number of bits that must be sent per unit time increases, and in order to achieve predetermined quality, transmission power must be raised in proportion as the transmission rate increases. FIG.1C shows the transmission power for each TFC, with transmission power assumed to be in aproportional relation ship with the number of bits. In FIG. 1C, the dotted line shows the communication terminal apparatus's maximum transmission power (that is, power margin) Pmax.

In the case shown in FIG. 1C, the communication terminal apparatus determines that the total transmission power in TFC1 through TFC3 in the TFCS is less than maximum transmission power Pmax, and therefore determines that the total transmission power in TFC4 through TFC6 in the TFCS exceeds maximum transmission power Pmax and transmission power is insufficient, making transmission impossible. The communication terminal apparatus then selects one TFC from among TFC1 through TFC3 for which transmission is determined to be possible.

If a communication terminal apparatus performs the above operation at regular intervals - that is, by determining whether or not the maximum transmission power is exceeded for each TFC in a TFCS - communication can be performed without exceeding the communication terminal apparatus's maximum transmission power.

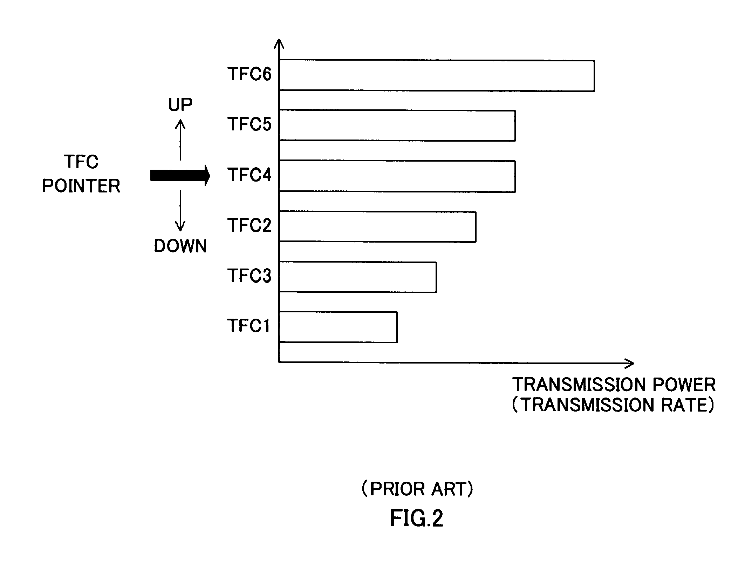

Furthermore, a radio communication system in which a common TFC pointer is set by a radio base station apparatus and communication terminal apparatus, and the communication terminal apparatus does not perform transmission at a maximum transmission rate less than or equal to the TFC pointer is described in "3GPP TR 25. 896 V0.3.1 (R1-030633)" (hereinafter referred to as "Document 1"). A brief description of this radio communication system will now be given. Arranging the TFCS in FIG. 1C in decreasing order of transmission power (transmission rate) gives the arrangement shown in FIG.2. First, a radio base station apparatus or RNC (Radio Network Controller) sets information of the kind of TFCS shown in FIG. 2, and transmits this TFCS information to a communication terminal apparatus via the radio base station apparatus.

Also, based on its own reception resources, etc., the radio base station apparatus sets a TFC pointer indicating the maximum transmission rate at which the communication terminal apparatus can transmit (that is, the TFC number corresponding to the maximum transmission rate), and informs the communication terminal apparatus of this TFC pointer. From among the TFCs not exceeding the transmission rate indicated by the informed TFC pointer, the communication terminal apparatus determines the TFC indicating the maximum transmission rate at which transmission is possible based on the communication terminal apparatus's power margin and buffer information. Then the communication terminal apparatus transmits an uplink signal in accordance with a spreading factor, modulationmethod, coding rate, data size, etc., conforming to the determined TFC.

When changing the TFC pointer, the radio base station apparatus, in addition to changing its own TFC pointer, causes the communication terminal apparatus' s TFC pointer to be updated in line with its own TFC pointer by transmitting an up/down/keep signal to the communication terminal apparatus.

Normally, an up/down/keep signal is transmitted without error correction coding being executed, and therefore if a receive error occurs in the communication terminal apparatus, the TFC pointer of the communication terminal apparatus will become different from the TFC pointer of the radio base station apparatus. As a result, the communication terminal apparatus will perform transmission at a transmission rate higher than that permitted (when the TFC pointer of the communication terminal apparatus is displaced so as to become larger than the TFC pointer of the base station), or will perform transmission at a low transmission rate despite being able to transmit at a higher transmission rate (when the TFC pointer of the communication terminal apparatus is displaced so as to become smaller than the TFC pointer of the base station). This entails degradation of uplink signal quality or a decrease in communication capacity.

A method of correcting this difference between the TFC pointer of a radio base station apparatus and the TFC pointer of a communication terminal apparatus has been described in "TSG-RAN Working Group 1 meeting #32 (R1-030547) " (hereinafter referred to as "Document 2"). According to this Document 2, a method is proposed in which, for example, a radio base station apparatus sends a communication terminal apparatus an actual TFC number indicating the TFC pointer at predetermined intervals, separately from an up/down/keep signal.

However, a problem with using the method described in Document 2 above is that, assuming that the TFC pointer of the communication terminal apparatus is constantly coordinated with the TFC pointer of the radio base station apparatus, it is necessary to use a short interval for transmitting a TFC number, and the amount of communicated information increases proportionally. Also, if the interval at which a TFC number is transmitted is lengthened, there is a risk that the time during which the TFC pointers are different will increase.

### Disclosure of Invention

It is an object of the present invention to provide a radio communication method, radio communication system, radio base station apparatus, and communication terminal apparatus that enable a TFC pointer of a communication terminal apparatus to be made to match a TFC pointer of a radio base station apparatus by using known information effectively even when an up/down/keep signal is received erroneously by the communication terminal apparatus.

This object is achieved by coordinating the TFC pointers of a communication terminal apparatus and radio base station apparatus by making effective use of a TFCI transmitted from the communication terminal apparatus.

### Brief Description of Drawings

FIG.1A is a drawing showing TFs (Transport Formats) of DCHs (Dedicated Channels);
FIG. 1B is a drawing showing TFCs (Transport Format Combinations) and numbers of bits (transmission rates);
FIG.1C is a drawing showing TFCs and transmission power;
FIG.2 is a drawing provided to explain a TFCS and a TFC pointer;
FIG.3 is a block diagram showing the configuration of a radio base station apparatus according to Embodiment 1 of the present invention;
FIG.4 is a block diagram showing the configuration of a TFC pointer control section;
FIG.5 is a block diagram showing the configuration of a communication terminal apparatus of Embodiment 1;
FIG.6 is a block diagram showing the configuration of a TFC pointer control section;
FIG.7 is a flowchart showing a TFC pointer adjustment operation by a radio base station apparatus of Embodiment 1;
FIG.8 is a flowchart showing a TFC pointer adjustment operation by a communication terminal apparatus of Embodiment 1;
FIG. 9 is a sequence diagram showing TFC pointer adjustment operations of a radio base station apparatus and communication terminal apparatus of Embodiment 1;
FIG. 10 is a sequence diagram showing TFC pointer adjustment operations of a conventional radio base station apparatus and communication terminal apparatus;
FIG. 11 is a block diagram showing the configuration of a radio base station apparatus of Embodiment 2;
FIG.12 is a block diagram showing the configuration of a TFC pointer control section;
FIG.13 is a block diagram showing the configuration of a communication terminal apparatus of Embodiment 2;
FIG.14 is a block diagram showing the configuration of a TFC pointer control section;
FIG.15 is a block diagram showing the configuration of a TFC determination section;
FIG. 16A is a drawing provided to explain a first case within an actual checking method in a TFCI checking section;
FIG.16B is a drawing provided to explain a second case within an actual checking method in a TFCI checking section;
FIG. 16C is a drawing provided to explain a third case within an actual checking method in a TFCI checking section;
FIG.16D is a drawing provided to explain a fourth case within an actual checking method in a TFCI checking section;
FIG.17A is a drawing provided to explain a first case within an actual checking method in a TFCI checking section;
FIG.17B is a drawing provided to explain a second case within an actual checking method in a TFCI checking section;
FIG. 17C is a drawing provided to explain a third case within an actual checking method in a TFCI checking section;
FIG.17D is a drawing provided to explain a fourth case within an actual checking method in a TFCI checking section;
FIG.18 is a flowchart showing a TFC pointer adjustment operation by a radio base station apparatus of Embodiment 2;
FIG. 19 is a flowchart showing TFCI and power margin/buffer size information transmission processing by a communication terminal apparatus of Embodiment 2;
FIG.20 is a sequence diagram showing TFC pointer adjustment operations of a radio base station apparatus and communication terminal apparatus of Embodiment 2;
FIG.21 is a block diagram showing the configuration of a radio base station apparatus of Embodiment 3;
FIG.22 is a block diagram showing the configuration of a TFC pointer control section;
FIG.23 is a block diagram showing the configuration of a communication terminal apparatus of Embodiment 3;
FIG.24 is a flowchart showing a TFC pointer adjustment operation by a radio base station apparatus of Embodiment 3;
FIG.25 is a flowchart showing a TFC pointer flag creation operation by a communication terminal apparatus of Embodiment 3; and
FIG.26 is a sequence diagram showing TFC pointer adj ustment operations of a radio base station apparatus and communication terminal apparatus of Embodiment 3.

### Best Mode for Carrying out the Invention

With reference now to the accompanying drawings, embodiments of the present invention will be explained in detail below.

### (Embodiment 1)

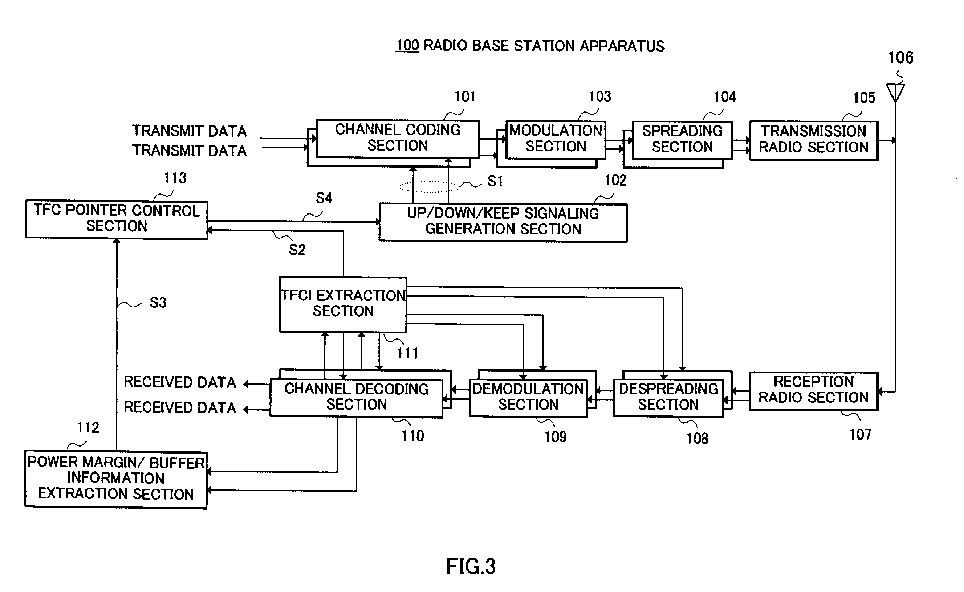

FIG.3 shows the configuration of a radio base station apparatus according to Embodiment 1 of the present invention. In radio base station apparatus 100, transmit data destined for communication terminals, and up/down/keep signals S1 destined for communication terminals created by an up/down/keep signaling generation section 102, are input to channel coding sections 101. Each channel coding section 101 executes error correction coding processing and interleaving processing on transmit data, and sends the processed data to a modulation section 103. Up/down/keep signals are output directly without being coded.

Modulation sections 103 modulate channel coding data by means of a modulation method such as QPSK (Quadrature Phase Shift Keying) or 16QAM (Quadrature Amplitude Modulation), and send modulated symbols to spreading sections 104. Each spreading section 104 performs spreading processing on a signal destined for a communication terminal using a spreading code assigned to that communication terminal, and sends the processed signal to a transmission radio section 105. Transmission radio section 105 performs predetermined radio processing such as digital-analog conversion processing and up-conversion, and supplies a signal that has performed radio processing to an antenna 106.

A reception radio section 107 executes predetermined radio processing such as down-conversion and analog-digital conversion processing on a signal received by antenna 106, and sends a signal that has performed radio processing to despreading sections 108. Each despreading section 108 obtains a signal from a communication terminal by performing despreading processing using a spreading code assigned to that communication terminal. After being demodulated by a demodulation section 109, a signal from a communication terminal is sent to a channel decoding section 110. Channel decoding section 110 obtains received data from a communication terminal by executing de-interleaving processing and error correction decoding processing on the demodulated signal.

Channel decoding section 110 output is also sent to a TFCI (Transmit Format Combination Indicator) extraction section 111, and to a power margin/buffer information extraction section 112. TFCI extraction section 111 extracts TFCI information S2 embedded at a predetermined position in the received signal. Power margin/buffer information extraction section 112 extracts power margin information and buffer information (hereinafter referred to as power margin/buffer information) S3 embedded at a predetermined position in the received signal.

Based on TFCI information TFCI transmitted from communication terminals, extraction section 111 notifies despreading sections 108, demodulation sections 109, and channel coding sections 110 of how data transmitted, or to be transmitted henceforth, by the respective communication terminals is transmitted. That is to say, TFCI extraction section 111 notifies the circuits using the information of the spreading factor, modulation method, coding rate or data size, and so forth, based on TFCI information. TFCI extraction section 111 also sends extracted TFCI information S2 to a TFC pointer control section 113.

Using TFCI information S2 from TFCI extraction section 111 and power margin/buffer information S3 from power margin/buffer information extraction section 112, TFC pointer control section 113 forms a TFC pointer control signal S4 for raising or lowering the TFC pointer of a communication terminal apparatus, and sends this to up/down/keep signaling generation section 102. Based on TFC pointer control signal S4, up/down/keep signaling generation section 102 generates up/down/keep signals S1 directing that the TFC pointer be raised, lowered, or kept unchanged.

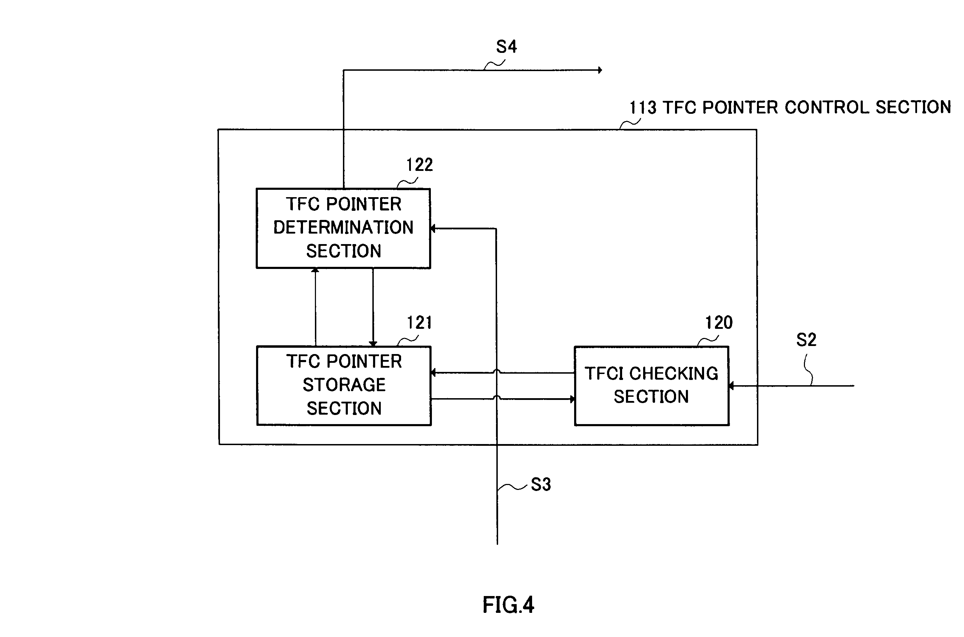

FIG.4 shows the configuration of TFC pointer control section 113 of this embodiment. In TFC pointer control section 113, TFCI information S2 extracted by TFCI extraction section 111 is input to a TFCI checking section 120. TFCI checking section 120 compares TFCI information S2 with a TFC pointer stored in a TFC pointer storage section 121, and checks whether or not the stored TFC pointer is different from the TFC indicated by the TFCI. If the stored TFC pointer is different from the TFC indicated by the TFCI, TFCI checking section 120 updates the stored TFC pointer to the pointer indicated by the TFCI. If the stored TFC pointer is the same as the TFC indicated by the TFCI, TFCI checking section 120 does not update the stored TFC pointer.

A TFC pointer determination section 122 determines the TFC pointer taking into consideration power margin/buffer information S3 from power margin/buffer information extraction section 112 and free resources on the reception in base station. TFC pointer determination section 122 also forms TFC pointer control signal S4 by comparing the newly determined TFC pointer with the TFC pointer stored in TFC pointer storage section 121, and sends this TFC pointer control signal S4 to up/down/keep signaling generation section 102. Also, if the TFC pointer has been updated, TFC pointer determination section 122 stores the new TFC pointer in TFC pointer storage section 121.

Thus, in radio base station apparatus 100 of this embodiment, by providing a TFCI checking section 120 that checks whether or not a TFC pointer of its own station is different from a TFC indicated by a TFCI, and if the TFC pointer of its own station is different from the TFC indicated by the TFCI, updates the TFC pointer of its own station to the TFC indicated by the TFCI, and a TFC pointer determination section 122 that generates a control signal for forming an up/down/keep signal by comparing this updated TFC pointer with the new TFC pointer, it is possible to cause a TFC pointer of a radio base station apparatus and a TFC pointer of a communication terminal apparatus to match even when the TFC pointers of the radio base station apparatus and communication terminal apparatus are different due to an up/down/keep signal transmission error.

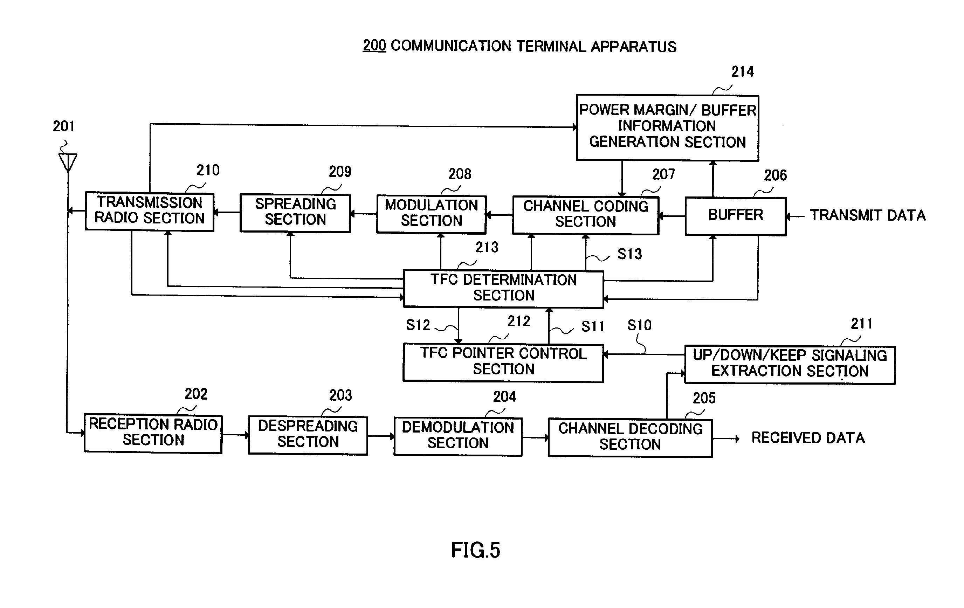

FIG.5 shows the configuration of a communication terminal apparatus that performs communication with radio base station apparatus 100 in FIG.3. In communication terminal apparatus 200, a received signal from an antenna 201 is input to a reception radio section 202. Reception radio section 202 executes predetermined radio processing such as down-conversion and analog-digital conversion processing on the received signal. The signal resulting from this radio processing is despread by a despreading section 203, demodulated by a demodulation section 204, and subjected to channel decoding processing by a channel decoding section 205, by which means received data is obtained from channel decoding section 205.

In communication terminal apparatus 200, transmit data is input to a channel coding section 207 via a buffer 206, and performs error correction coding processing and interleaving processing by channel coding section 207. The output of channel coding section 207 is modulated by a modulation section 208, spread by a spreading section 209, and subjected to predetermined radio processing by a transmission radio section 210, and then transmitted from antenna 201.

In addition, channel decoding section 205 output is sent to an up/down/keep signaling extraction section 211. Up/down/keep signaling extraction section 211 extracts an up/down/keep signal S10 embedded at a predetermined position in the received data, and sends that up/down/keep signal S10 to a TFC pointer control section 212.

TFC pointer control section 212 raises the TFC pointer (that is, changes the TFC pointer to a TFC with a higher transmission rate) when an up signal is input, lowers the TFC pointer (that is, changes the TFC pointer to a TFC with a lower transmission rate) when a down signal is input, and keeps the TFC pointer unchanged when nothing is input.

To a TFC determination section 213, TFC pointer information S11 is input from TFC pointer control section 212, the amount of data stored in the current buffer is input from buffer 206, and transmission power margin information is input from transmission radio section 210. Then TFC determination section 213 determines a TFC not exceeding the transmission rate indicated by the TFC pointer based on the current buffer 206 data amount and the power margin situation. TFC determination section 213 sends the data size, coding rate, modulation method, spreading factor, and transmission power conforming to the determined TFC to buffer 206, channel coding section 207, modulation section 208, spreading section 209, and transmission radio section 210, respectively.

TFC determination section 213 sends TFCI information S13 indicating the determined TFC to channel coding section 207. Channel coding section 207 executes error correction coding processing on this TFCI, and then outputs the TFCI. By this means, a TFCI that has performed error correction coding processing is transmitted to radio base station apparatus 100.

In addition to this, TFC determination section 213 sends determined TFC information S12 to TFC pointer control section 212. TFC pointer control section 212 adjusts (updates or changes) the TFC pointer to the TFC determined by TFC determination section 213.

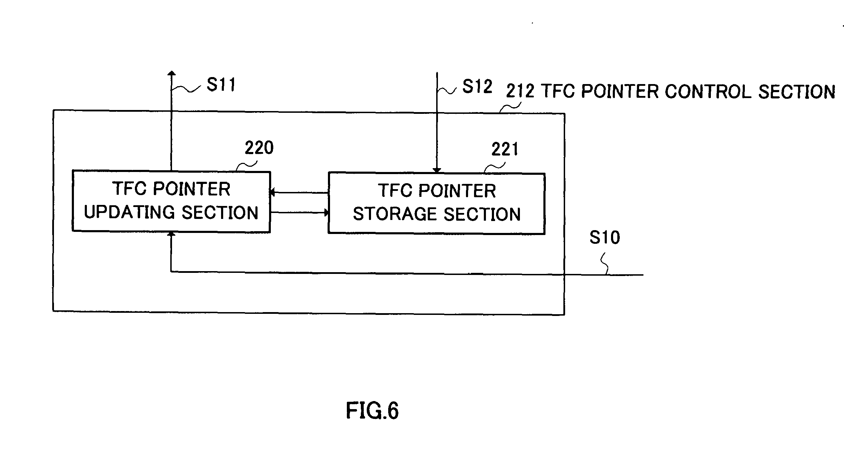

Here, TFC pointer control section 212 is configured as shown in FIG.6. TFC pointer control section 212 has a TFC pointer updating section 220 and TFC pointer storage section 221, andup/down/keep signal S10 is input to TFC pointer updating section 220. TFC pointer updating section 220 reads a TFC pointer stored in TFC pointer storage section 221, updates this TFC pointer to a TFC pointer corresponding to up/down/keep signal S10, and writes the updated TFC pointer to TFC pointer storage section 221. TFC pointer updating section 220 also sends updated TFC pointer information S11 to TFC determination section 213.

The TFC pointer stored in TFC pointer storage section 221 is rewritten as the TFC determined by TFC determination section 213. If TFC information S12 input from TFC determination section 213 is the same as the TFC pointer stored in TFC pointer storage section 221, input from TFC determination section 213 to TFC pointer storage section 221 and modification need not be performed. Also, when initializing the TFC pointer with TFC information S12 from TFC determination section 213, the TFC pointer updated by TFC pointer updating section 220 need not be written into TFC pointer storage section 221.

Thus, communication terminal apparatus 200 of this embodiment has a TFC determination section 213 that determines a TFC indicating a transmission rate not exceeding the TFC pointer, a TFC pointer control section 212 that updates the TFC pointer based on an up/down/keep signal S10 from the radio base station apparatus and also by adjustment to a TFC determined by TFC determination section 213, and a TFCI transmission section that transmits TFCI information S13 indicating a TFC determined by TFC determination section 213 to the radio base station apparatus.

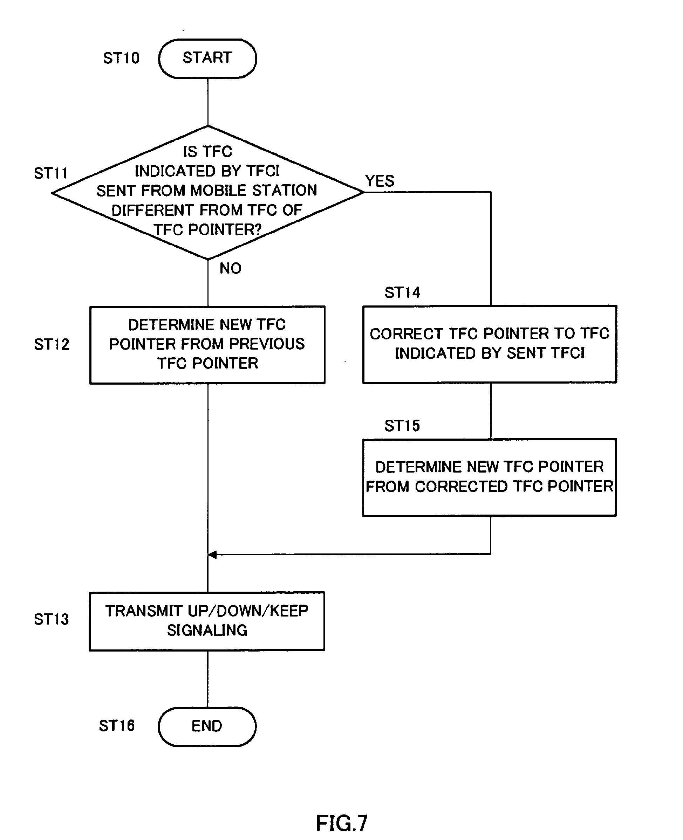

Next, TFC pointer adjustment operations by radio base station apparatus 100 and communication terminal apparatus 200 of this embodiment will be described. FIG. 7 shows an adjustment operation by radio base station apparatus 100. When radio base station apparatus 100 starts an adjustment operation in step ST10, in step ST11 TFCI checking section 120 checks whether or not the TFC indicated by a TFCI sent from communication terminal apparatus (mobile station) 200 and the TFC of a TFC pointer held by radio base station apparatus 100 are different.

If a negative result is obtained in step ST11 - that is, if the TFC pointer of radio base station apparatus 100 and the TFC used by communication terminal apparatus 200 are the same - the processing flow proceeds to step ST12, and TFC pointer determination section 122 determines a new TFC pointer from the previous TFC pointer held by radio base station apparatus 100. The processing flow then proceeds to following step ST13, in which TFC pointer determination section 122 compares the relative si zes of the new TFC pointer and the previous TFC pointer, generates an up/down/keep signal based on the result of this comparison, and transmits the up/down/keep signal.

If, on the other hand, a positive result is obtained in step ST11 - that is, if the TFC pointer of radio base station apparatus 100 and the TFC used by communication terminal apparatus 200 are different - the processing flow proceeds to step ST14, and the TFC pointer stored in TFC pointer storage section 121 is updated to the TFC indicated by the TFCI. By this means, the TFC pointer of radio base station apparatus 100 and the TFC pointer of communication terminal apparatus 200 are corrected to the same value. Then in following step ST15, TFC pointer determination section 122 determines a new TFC pointer from the corrected TFC pointer. The processing flow then proceeds to step ST13, in which TFC pointer determination section 122 compares the relative sizes of the new TFC pointer and the corrected TFC pointer, generates an up/down/keep signal based on the result of this comparison, and transmits the up/down/keep signal.

Then, after the processing in step ST13, radio base station apparatus 100 proceeds to step ST16 and terminates the TFC pointer adjustment operation. Thus, by performing this TFC pointer adjustment operation, radio base station apparatus 100 can maintain a TFC pointer that is the same as the TFC pointer of communication terminal apparatus 200.

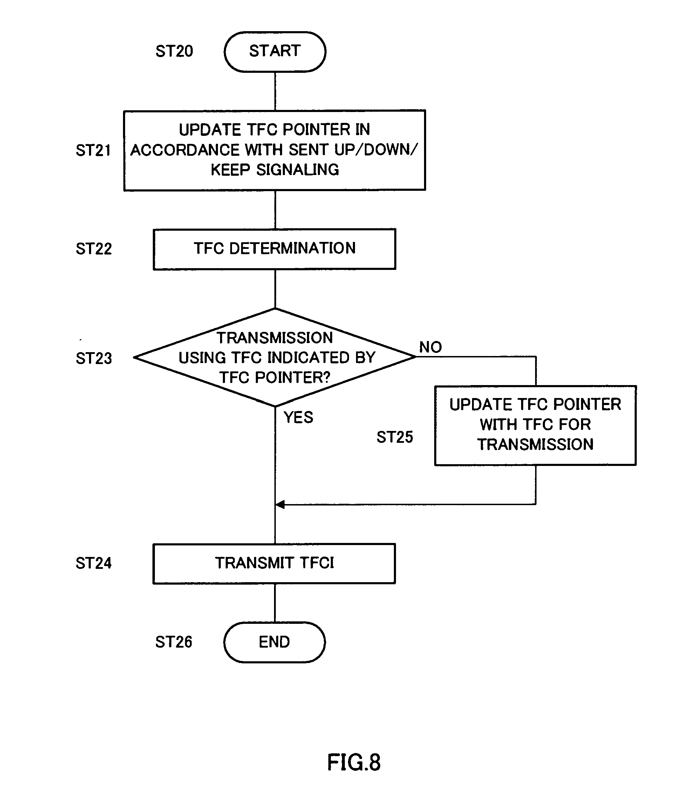

FIG.8 shows a TFC pointer adjustment operation by communication terminal apparatus 200. When communication terminal apparatus 200 starts an adjustment operation in step ST20, in step ST21 TFC pointer control section 212 updates the TFC pointer in accordance with an up/down/keep signal sent from radio base station apparatus 100, and the processing flow then proceeds to step ST22. In step ST22 TFC determination section 213 determines a TFC not exceeding the TFC pointer, and the processing flow then proceeds to step ST23.

In step ST23, it is determined whether or not to transmit with a TFC that is the same as the TFC indicated by the TFC pointer - that is, whether or not the TFC pointer updated in step ST21 and the TFC determined in step ST22 are the same - and if transmitting with a TFC that is the same as the TFC pointer, the processing flow proceeds to step ST24. If, on the other hand, it is determined in step ST23 to transmit with a TFC different from the TFC pointer (actually, if it is determined that the TFC is smaller than the TFC pointer, since transmission is never performed with a TFC larger than the TFC pointer), the processing flow proceeds to step ST25, in which TFC determination section 213 updates the TFC pointer of TFC pointer storage section 221 by adjusting it to the TFC for transmission, and then the processing flow proceeds to step ST24.

In step ST24, a TFCI is transmitted to radio base station apparatus 100, and then the TFC pointer adjustment operation is terminated in step ST26. Thus communication terminal apparatus 200 changes the TFC pointer to the TFC actually used. By this means, a TFCI transmitted to radio base station apparatus 100 indicates the TFC pointer of communication terminal apparatus 200.

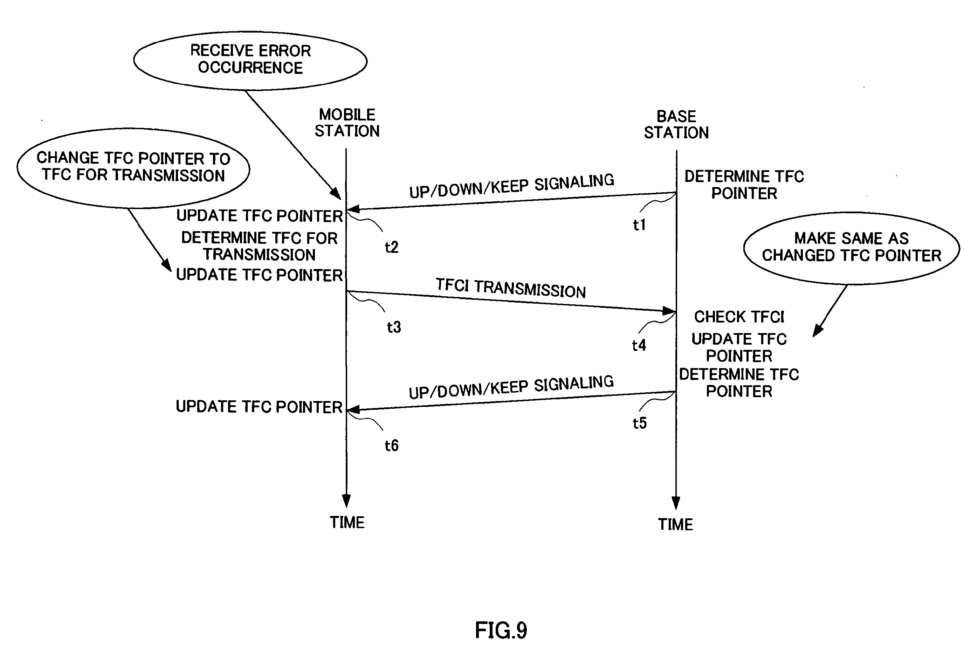

FIG.9 illustrates the adjustment of TFC pointers of radio base station apparatus (base station) 100 and communication terminal apparatus (mobile station) 200 according to this embodiment. First, before the kind of transmission/reception shown in FIG. 9 is started, it is assumed that the base station notifies the mobile station of a TFC number that indicates a TFC pointer, and that the TFC pointers of both stations match. The base station determines a new TFC pointer before point t1, and at point t1 transmits an up/down/keep signal (up/down/keep signaling) based on the relationship between the previous TFC pointer and the new TFC pointer.

This up/down/keep signal is received by the mobile station at point t2, but when a reception error occurs at this time, the mobile station updates the TFC pointer to a value different from that intended by the base station. Therefore, the mobile station determines the TFC based on an erroneous TFC pointer. Thus the mobile station changes the TFC pointer in line with the determined TFC. And then, the mobile station transmits the TFCI at point t3. By this means, the mobile station's TFC pointer becomes the same as the TFC indicated by the TFCI.

The TFCI is received by the base station at point t4. The base station checks the received TFCI, and performs updating so as to make its own TFC pointer match the TFC indicated by the TFCI. By this means, the TFC pointer of the mobile station and the TFC pointer of the base station can be made the same. The base station next determines the new TFC pointer, generates an up/down/keep signal by comparing this new TFC pointer with the updated TFC pointer, and transmits this up/down/keep signal at point t5.

The up/down/keep signal is received by the mobile station at point t6. The mobile station updates the TFC pointer it holds based on the up/down/keep signal.

Thus, even if the mobile station receives an up/down/keep signal erroneously, since the TFC pointer of the base station is updated in line with the incorrect TFC pointer used by the mobile station, and thereafter an up/down/keep signal is generated that indicates whether this incorrect TFC pointer is to be raised or lowered, the TFC pointer of the mobile station can be adjusted to the value intended by the base station.

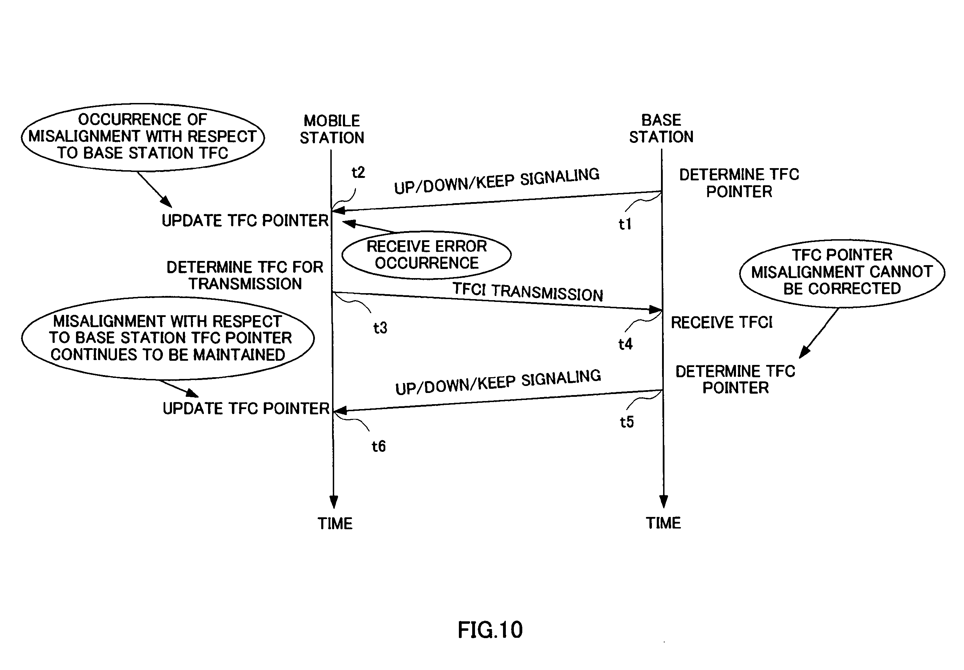

FIG. 10 shows an example of conventional general TFC pointer adjustment processing for comparison with this embodiment. In the case illustrated in FIG.10, when an up/down/keep signal receive error occurs at point t2, this mobile station subsequently continues to determine a TFC based on this incorrect TFC pointer. Also, the base station continues to send up/down/keep signals to the mobile station based on a TFC pointer that is different from the TFC pointer of the mobile station. That is to say, the difference between the TFC pointers of the base station and the mobile station continues to be maintained. As a result, there is a possibility that transmission will be performed by the mobile station at a transmission rate different from the transmission rate intended by the base station.

Thus, according to this embodiment, by having a communication terminal apparatus 200 transmit a TFCI indicating a selected TFC to a radio base station apparatus 100, and having radio base station apparatus 100 reference the TFC indicated by the TFCI and form an up/down/keep signal, and transmit this up/down/keep signal to communication terminal apparatus 200, a TFC pointer of communication terminal apparatus 200 can be made to match a TFC pointer of radio base station apparatus 100 by using known information (a TCFI) effectively even when an up/down/keep signal is received erroneously by communication terminal apparatus 200.

As a result, it is possible to cause uplink transmission to be performed at the transmission rate intended by radio base station apparatus 100. Also, since a TFCI is generally transmitted with error correction coding executed, the TFC pointers of both stations can be made to match certainly even in a propagation path environment conducive to up/down/keep signal errors.

### (Embodiment 2)

A special feature of this embodiment is that, when a communication terminal apparatus selects a TFC different from the TFC pointer (actually, a TFC smaller than the TFC pointer), information forming the basis for selecting a TFC comprising power margin and buffer size is transmitted to a radio base station apparatus together with a TFCI, and the radio base station apparatus determines on the basis of these items of information whether or not the TFC pointer of the communication terminal apparatus matches the TFC pointer of the radio base station apparatus itself, and transmits a TFC pointer number to the communication terminal apparatus only if the TFC pointers are different.

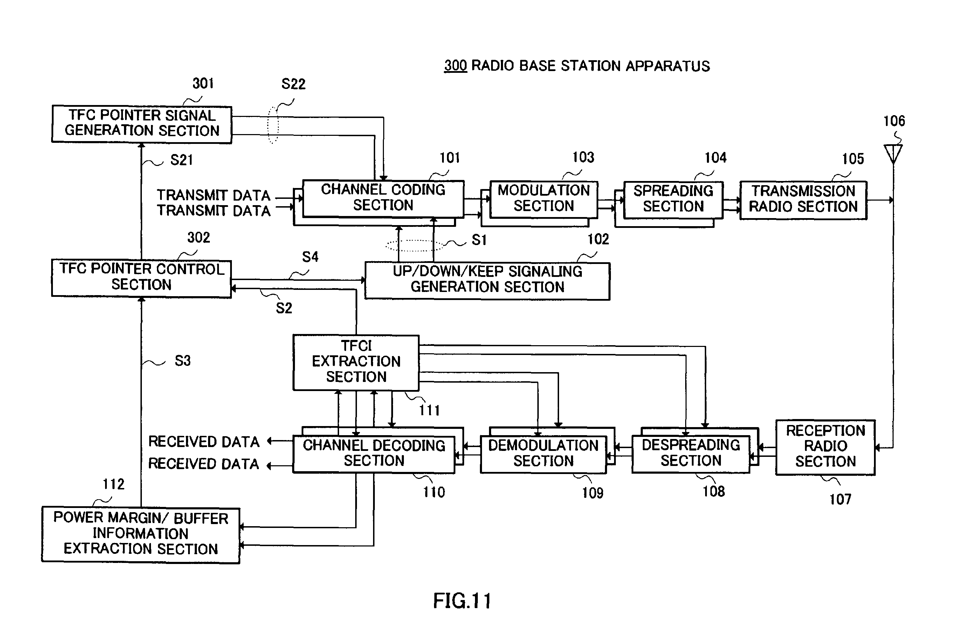

FIG.11, in which parts corresponding to those in FIG.3 are assigned the same codes as in FIG. 3, shows the configuration of a radio base station apparatus of this embodiment. Radio base station apparatus 300 has a similar configuration to radio base station apparatus 100 in FIG.3, except in that it has a TFC pointer signal generation section 301 and that the configuration of the TFC pointer control section 302 is different.

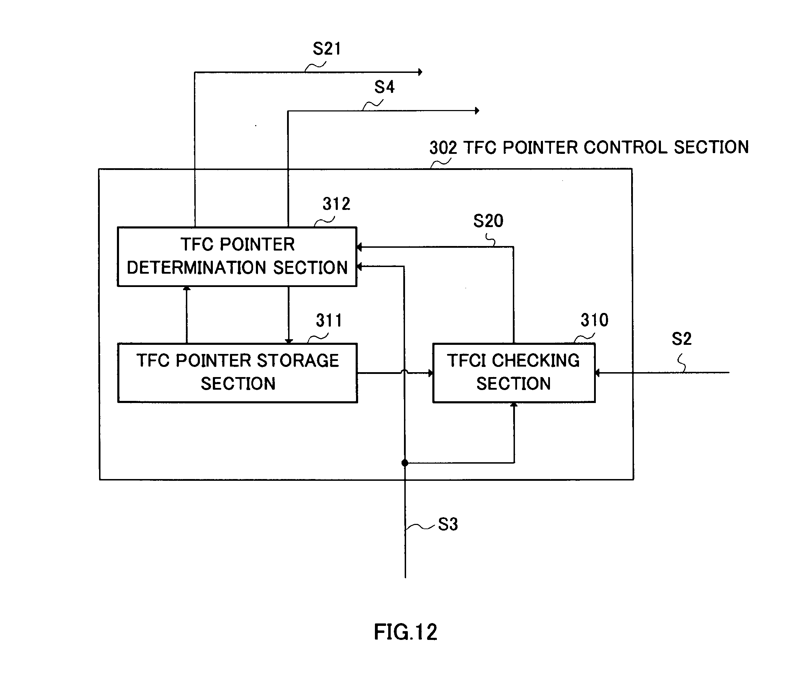

FIG.12 shows the configuration of TFC pointer control section 302. A TFCI checking section 310 of TFC pointer control section 302 determines whether or not the TFC indicated by the TFCI extracted by TFCI extraction section 111 and the TFC of the base station's own TFC pointer are different. If these TFCs are different, TFCI checking section 310 references power margin/buffer information S3 sent from the relevant communication terminal apparatus and checks whether or not the TFC indicated by the TFCI was generated based on an incorrect TFC pointer. That is to say, TFCI checking section 310 determines whether or not the TFC pointer of the communication terminal apparatus is incorrect. TFCI checking section 310 then sends a determination result S20 to a TFC pointer determination section 312.

If a determination result S20 indicating that the TFC pointer is not incorrect is input, TFC pointer determination section 312 determines whether the TFC pointer is to be raised, lowered, or kept unchanged based on the TFC pointer stored in a TFC pointer storage section 311, power margin/buffer information S3, and free resources on the reception in base station, and sends a TFC pointer control signal S4 to up/down/keep signaling generation section 102. When the TFC pointer is raised or lowered, the raised or lowered new TFC pointer is stored in TFC pointer storage section 311.

On the other hand, if a determination result S20 indicating that the TFC pointer is incorrect is input, TFC pointer determination section 312 determines a new TFC pointer based on power margin/buffer information S3 and free resources on the reception in base station, and sends a TFC pointer control signal S4 to up/down/keep signaling generation section 102. When the TFC pointer is raised or lowered, the raised or lowered new TFC pointer is stored in TFC pointer storage section 311. TFC pointer signal generation section 301 generates a TFC pointer signal S22 based on TFC pointer information S21, and sends this TFC pointer signal S22 to channel coding section 101. By this means, TFC pointer signal S22 performs error correction coding processing by channel coding section 101 and is transmitted to the communication terminal apparatus.

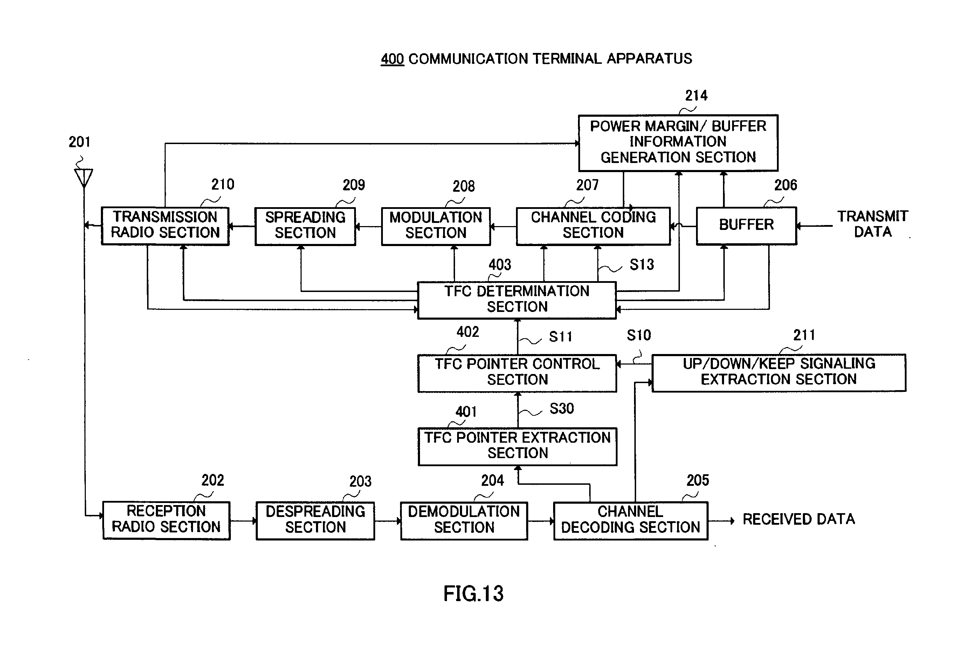

FIG.13, in which parts corresponding to those in FIG.5 are assigned the same codes as in FIG.5, shows the configuration of a communication terminal apparatus of this embodiment that performs communication with radio base station apparatus 300. Communication terminal apparatus 400 has a similar configuration to communication terminal apparatus 200 in FIG. 5, except in that it has a TFC pointer extraction section 401 and that the configurations of the TFC pointer control section 402 and TFC determination section 403 are different. TFC pointer extraction section 401 extracts TFC pointer information S30 from data that has performed channel decoding processing, and sends TFC pointer information S30 to TFC pointer control section 402.

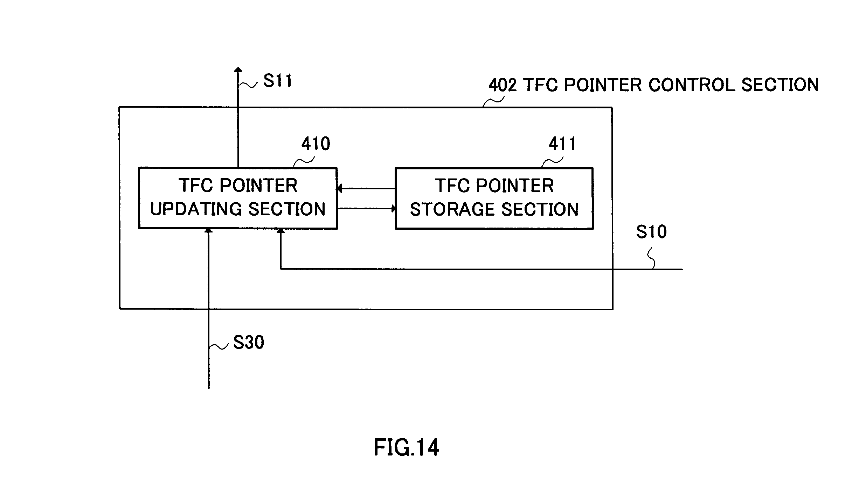

TFC pointer control section 402 is configured as shown in FIG.14. TFC pointer control section 402 has a TFC pointer updating section 410 and TFC pointer storage section 411. TFC pointer updating section 410 reads a TFC pointer stored in TFC pointer storage section 411, changes this TFC pointer to a TFC pointer corresponding to the up/down/keep signal, sends changed TFC pointer information S11 to TFC determination section 403, and also writes changed TFC pointer information S11 to TFC pointer storage section 411. In addition, when TFC pointer information S30 from TFC pointer extraction section 401 is input, TFC pointer updating section 410 rewrites the TFC pointer of the TFC pointer storage section 411 as that TFC pointer information S30, and also sends that TFC pointer information S30 to TFC determination section 403 as TFC pointer information S11.

Here, a case where TFC pointer information S30 is extracted is when it is determined by radio base station apparatus 300 that the TFC pointer of communication terminal apparatus 400 is incorrect. In such a case only, the TFC pointer stored in TFC pointer storage section 411 is forcibly made to match TFC pointer information S30. By this means, the TFC pointer of communication terminal apparatus 400 can be made to match the TFC pointer of radio base station apparatus 300.

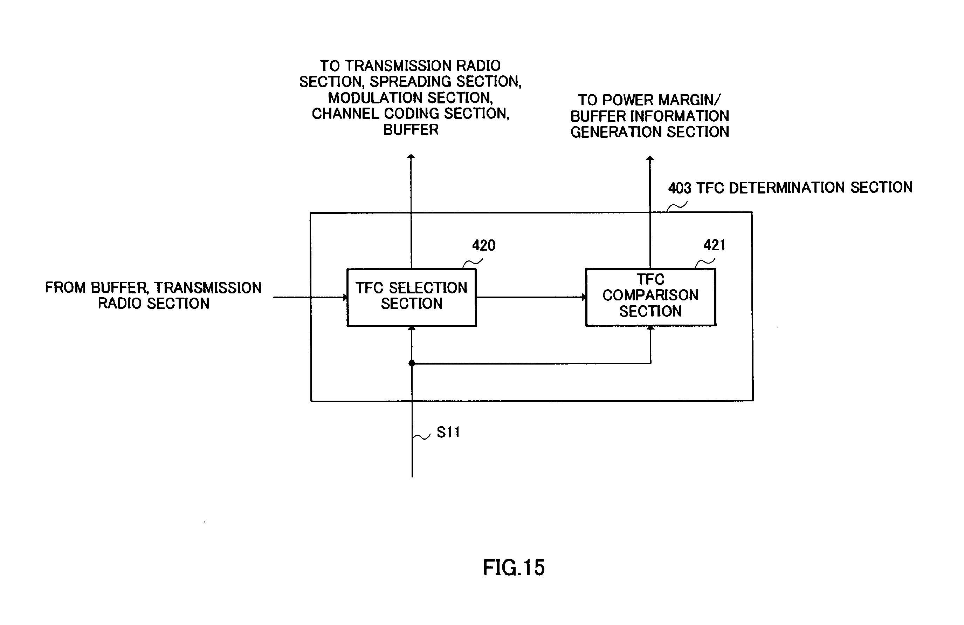

FIG. 15 shows the configuration of TFC determination section 403. In TFC determinationsection 403,TFC pointerinformation S11 from TFC pointer control section 402 is input to a TFC selection section 420. TFC selection section 420 selects a TFC of a transmission rate not exceeding the transmission rate indicated by the TFC pointer based on the current buffer 206 data amount and the transmission radio section 210 power margin situation. Then TFC selection section 420 sends the data size, coding rate, modulation method, spreading factor, and transmission power conforming to the selected TFC to the buffer, channel coding section, modulation section, spreading section, and transmission radio section, respectively.

In addition, TFC selection section 420 sends the selected TFC to a TFC comparison section 421. TFC comparison section 421 compares the TFC from TFC selection section 420 with TFC pointer information S11 from TFC pointer control section 402, and only if they are different, gives a directive to a power margin/buffer information generation section 214 to generate power margin/buffer information.

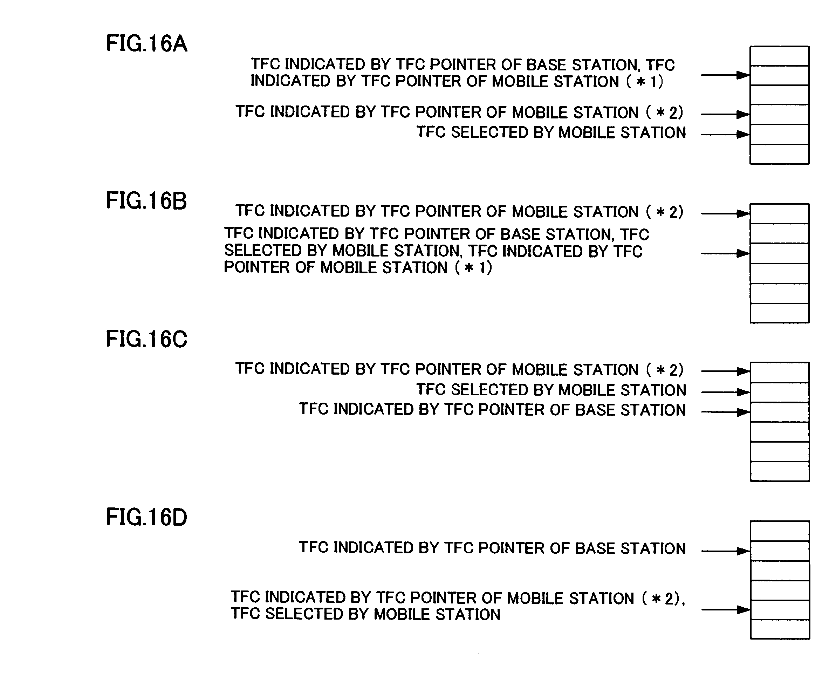

Using FIG. 16A through FIG. 16D and FIG. 17A through FIG. 17D, checking methods of TFCI checking section 310 of radio base station apparatus 300 (FIG.12) will now be described in more specific terms. FIG. 16A through FIG. 16D show the TFCI checking section 310 checking method when communication terminal apparatus (mobile station) 400 sends power margin/buffer size information only when the selected TFC is smaller than the TFC pointer, as described above. Four cases are considered here, as shown in FIG.16A through FIG.16D.

In case 1 shown in FIG.16A, it is assumed that the TFC indicated by the TFC pointer of a mobile station is the same as or smaller than the TFC indicated by the TFC pointer of the base station, and the TFC selected by the mobile station is smaller than the TFC indicated by the TFC pointer of the mobile station. In this case, the base station does not transmit a TFC pointer. This is because the mobile station is using a TFC not exceeding the TFC pointer indicated by the base station (known from the TFCI), and the reason for transmitting at the present transmission rate is known from the power margin and buffer size. Even if the TFC indicated by the mobile station's TFC pointer is assumed to be incorrect, there is no problem at the present time. Moreover, since the fact that this TFC pointer indicates an excess TFC can be ascertained by the base station, resources can be used effectively.

In case 2 shown in FIG.16B, it is assumed that the TFC indicated by the TFC pointer of a mobile station is the same as or greater than the TFC indicated by the TFC pointer of the base station, and the TFC selected by the mobile station is the same as the TFC indicated by the TFC pointer of the base station. In this case, when the TFC indicated by the mobile station's TFC pointer (*1 in the figure) is the same as the TFC indicated by the base station's TFC pointer, the base station does not transmit a TFC pointer. This is because it is known that the TFC pointer is correct since power margin and buffer size information has not been sent. On the other hand, when the TFC indicated by the mobile station's TFC pointer (*2 in the figure) is greater than the TFC indicated by the base station' s TFC pointer, the base station transmits a TFC pointer. The fact that the TFC indicated by the mobile station's TFC pointer (*2 in the figure) is greater than the TFC indicated by the base station' s TFC pointer is known because power margin and buffer size information has been sent.

In case 3 shown in FIG.16C, it is assumed that the TFC selected by a mobile station (known from the TFCI) is greater than the TFC indicated by the TFC pointer of the base station. In this case, it is clear that the TFC indicated by the mobile station's TFC pointer is greater than the TFC indicated by the base station's TFC pointer, and since the mobile station cannot be allowed to continue transmitting in this state, the base station transmits a TFC pointer.

In case 4 shown in FIG.16D, it is assumed that the TFC selected by a mobile station (known from the TFCI) is smaller than the TFC indicated by the TFC pointer of the base station, and the mobile station has selected a TFC that is the same as the TFC indicated by the mobile station's own TFC pointer (this being known from the fact that power margin and buffer size information has not been sent) . In this case, it is known that the mobile station's TFC pointer is incorrect, and therefore the base station transmits a TFC pointer.

FIG.17A through FIG.17D show the TFCI checking section 310 checking method when a mobile station always sends power margin/buffer size information when the selected TFC is smaller than the TFC pointer, and there are also other times when a TFC pointer is transmitted. Four cases are considered here, as shown in FIG.17A through FIG.17D.

In case 1 shown in FIG.17A, it is assumed that the TFC indicated by the TFC pointer of a mobile station is the same as or smaller than the TFC indicated by the TFC pointer of the base station, and the TFC selected by the mobile station is smaller than the TFC indicated by the TFC pointer of the mobile station. In this case, the base station does not transmit a TFC pointer. This is because the mobile station is using a TFC not exceeding the TFC pointer indicated by the base station (known from the TFCI), and the reason for transmitting at the present transmission rate is known from the power margin and buffer size. Even if the TFC indicated by the mobile station's TFC pointer is assumed to be incorrect, there is no problem at the present time. Moreover, since the fact that this TFC pointer indicates an excess TFC can be ascertained by the base station, resources can be used effectively.

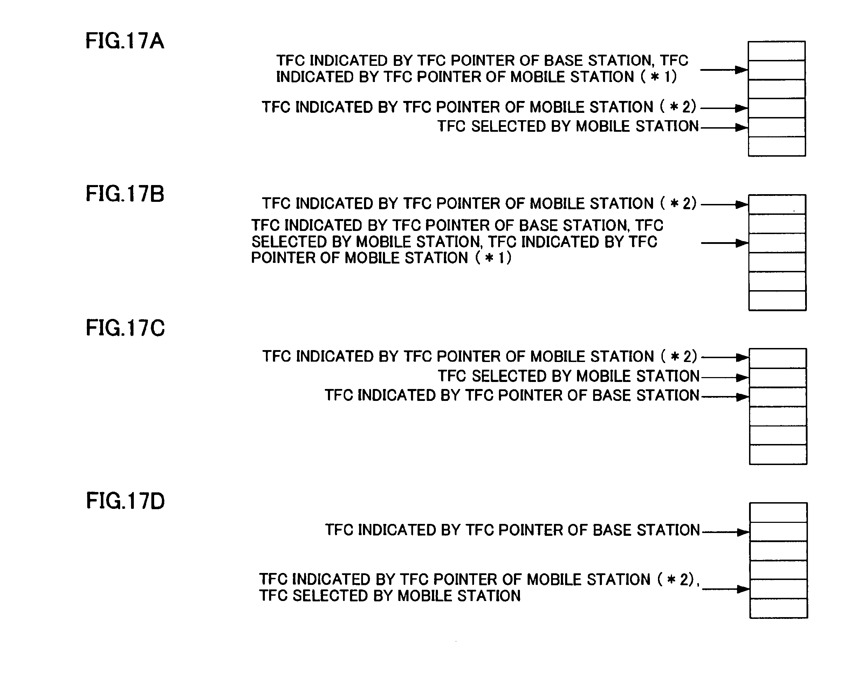

In case 2 shown in FIG.17B, it is assumed that the TFC indicated by the TFC pointer of a mobile station is the same as or greater than the TFC indicated by the TFC pointer of the base station, and the TFC selected by the mobile station is the same as the TFC indicated by the TFC pointer of the base station. In this case, the base station does not transmit a TFC pointer. This is because the mobile station is using a TFC that is the same as the TFC pointer indicated by the base station (known from the TFCI), and even if the TFC indicated by the mobile station's TFC pointer is assumed to be incorrect there is no problem at the present time, and furthermore this cannot be ascertained by the base station (since the power margin and buffer size may happen to be sent).

In case 3 shown in FIG.17C, it is assumed that the TFC selected by a mobile station (known from the TFCI) is greater than the TFC indicated by the TFC pointer of the base station. In this case, it is clear that the TFC indicated by the mobile station's TFC pointer is greater than the TFC indicated by the base station' s TFC pointer, and since the mobile station cannot be allowed to continue transmitting in this state, the base station transmits a TFC pointer.

In case 4 shown in FIG.17D, it is assumed that the TFC selected by a mobile station (known from the TFCI) is smaller than the TFC indicated by the TFC pointer of the base station, and the mobile station has selected a TFC that is the same as the TFC indicated by the mobile station's own TFC pointer (this being known from the fact that power margin and buffer size information has not been sent). In this case, when power margin/buffer information is not sent it is known that the mobile station's TFC pointer is the same as the selected TFC, and is incorrect, and therefore the base station transmits a TFC pointer. On the other hand, if powermargin/buffer information happens to be sent, and it is known that the data is sent at a low transmission rate despite being able to be sent at a transmission rate greater than or equal to the selected transmission rate, it is known that the mobile station's TFC pointer is incorrect, and therefore the base station transmits a TFC pointer. Also, when power margin/buffer information happens to be sent and it is known that the selected transmission rate is the maximum transmission rate at which transmission is possible, the base station does not know that the mobile station's TFC pointer is incorrect, and therefore the base station does not transmit a TFC pointer. In this case there is no problem since a TFC that is smaller than the base station's TFC pointer has been selected, and this is the maximum transmission rate at which transmission is possible.

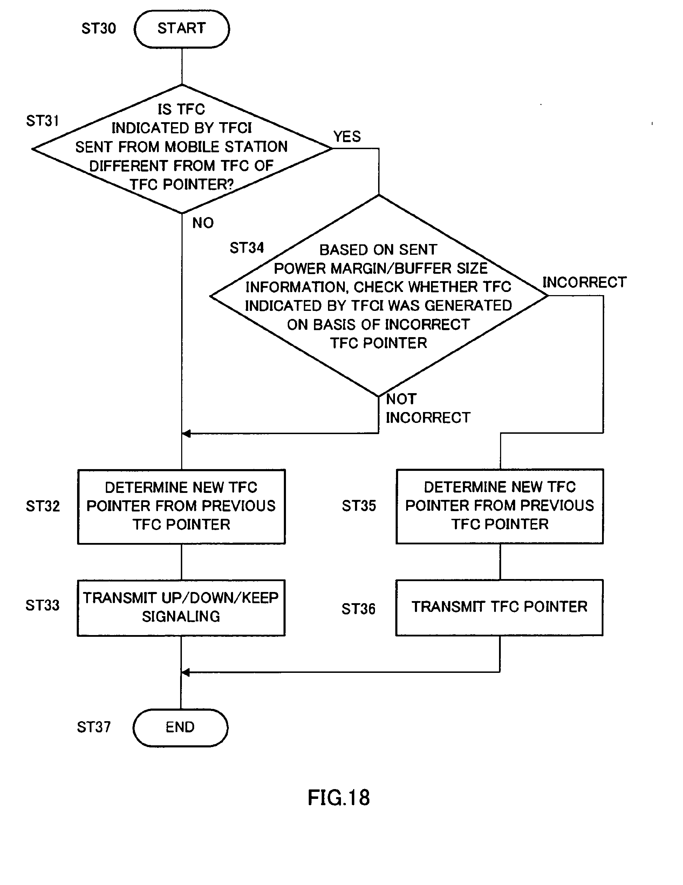

Next, TFC pointer adjustment operations by radio base station apparatus 300 and communication terminal apparatus 400 of this embodiment will be described. FIG.18 shows an adjustment operation by radio base station apparatus 300. When radio base station apparatus 300 starts an adjustment operation in step ST30, in step ST31 TFCI checking section 310 checks whether or not the TFC indicated by a TFCI sent from communication terminal apparatus (mobile station) 400 and the TFC of a TFC pointer held by radio base station apparatus 300 are different.

If a negative result is obtained in step ST31 - that is, if the TFC pointer of radio base station apparatus 300 and the TFC used by the mobile station are the same - the processing flow proceeds to step ST32, and TFC pointer determination section 312 determines a new TFC pointer from the previous TFC pointer held by radio base station apparatus 300. The processing flow then proceeds to following step ST33, in which TFC pointer determination section 312 compares the new TFC pointer and the previous TFC pointer, generates an up/down/keep signal based on the result of this comparison, and transmits the up/down/keep signal.

If, on the other hand, a positive result is obtained in step ST31, that is, if the TFC pointer of radio base station apparatus 300 and the TFC used by the mobile station are different, the processing flow proceeds to step ST34. In step ST34, TFCI checking section 310 references power margin/buffer information S3 sent from the mobile station, and checks whether or not the TFC indicated by TFCI information S2 was generated based on an incorrect TFC pointer. That is to say, TFCI checking section 310 determines whether or not the TFC pointer of the mobile station is incorrect. As explained using FIG. 16A through FIG. 16D and FIG. 17A through FIG. 17D, if the base station cannot determine whether its own TFC pointer and the TFC used by a mobile station are different but this is not a problem, it is determined that the mobile station's TFC pointer is not incorrect. The processing flow proceeds to step ST32 if the mobile station' s TFC pointer is determined not to be incorrect, or to step ST35 if the mobile station' s TFC pointer is determined to be incorrect.

If the base station processing flow proceeds to step ST35, TFC pointer determination section 312 determines a new TFC pointer based on power margin/buffer information S3 and free resources on the reception in base station and then transmits this TFC pointer information to the mobile station in step ST36. Then, after the step ST33 or step ST36 processing, the base station proceeds to step ST37 and terminates the TFC pointer adjustment operation.

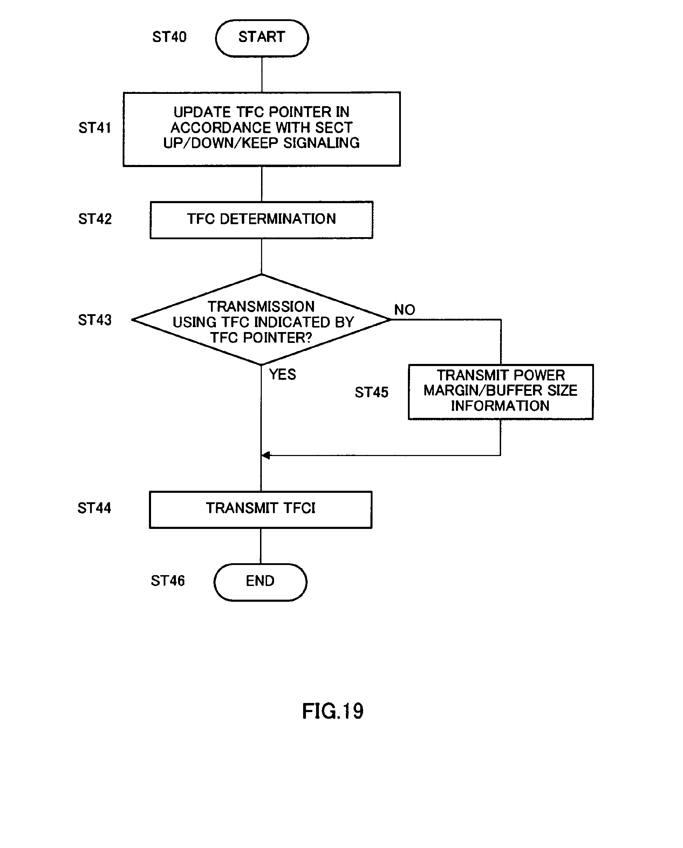

TFCI andpowermargin/buffer size information transmission processing by communication terminal apparatus 400 will now be described using FIG.19. When communication terminal apparatus 400 starts processing in step ST40, in step ST41 TFC pointer control section 402 updates the TFC pointer in accordance with an up/down/keep signal sent from radio base station apparatus 300, and the processing flow then proceeds to step ST42. In step ST42 TFC determination section 403 determines a TFC not exceeding the TFC pointer, and the processing flow then proceeds to step ST43.

In step ST43, TFC comparison section 421 judges whether or not a TFC that is the same as the TFC indicated by the TFC pointer has been determined, and if the TFC is the same as the TFC pointer, the processing flow proceeds to step ST44. In step ST44, TFCI information indicating the TFC used by communication terminal apparatus 400 is transmitted.

If, on the other hand, a negative result is obtained in step ST43, the processing flow proceeds to step ST45 in which power margin/buffer size information is transmitted, and then a TFCI is transmitted in step ST44. In FIG.19, power margin/buffer size information is transmitted in step ST45 and then a TFCI is transmitted in step ST44, but these transmissions may be performed in the reverse order or at the same time.

The special feature of communication terminal apparatus 400 of this embodiment is, in short, that when transmission is performed using a TFC different from the TFC indicated by the TFC pointer, power margin/buffer size information constituting the basis for selection of that TFC is sent. By this means, radio base station apparatus 300 can check whether or not the TFC pointer of communication terminal apparatus 400 is incorrect based on TFC information indicated by a TFCI and power margin/buffer size information constituting the basis for selection of that TFC.

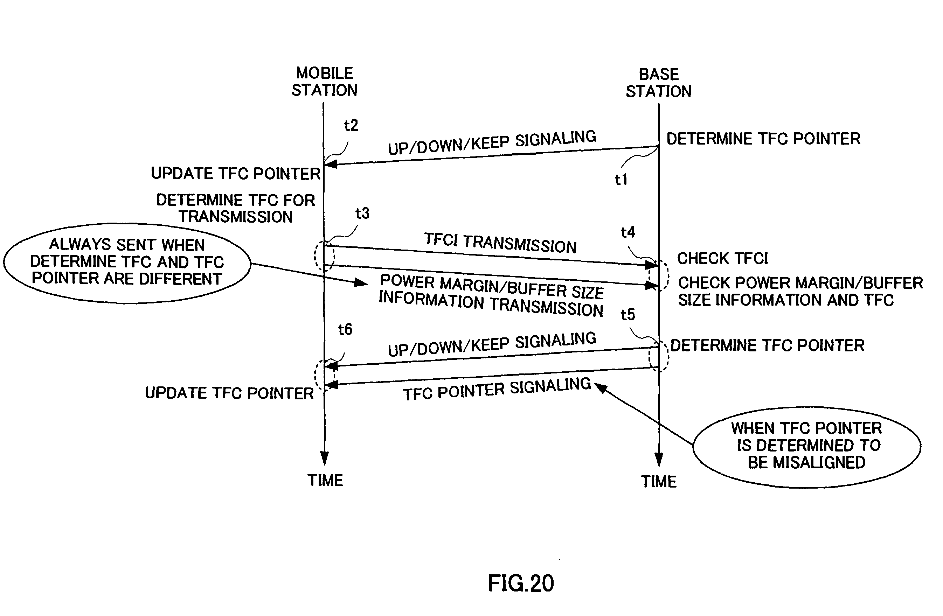

FIG. 20 illustrates the adjustment of TFC pointers of radio base station apparatus (base station) 300 and communication terminal apparatus (mobile station) 400 according to this embodiment. First, before the kind of transmission/reception shown in FIG.20 is started, it is assumed that the base station notifies the mobile station of a TFC number that indicates a TFC pointer, and that the TFC pointers of both stations match. The base station determines a new TFC pointer before point t1, and at point t1 transmits an up/down/keep signal based on the size relationship between the previous TFC pointer and the new TFC pointer.

On receiving this up/down/keep signal at point t2, the mobile station updates the TFC pointer based on the up/down/keep signal, and determines a TFC not exceeding this TFC pointer based on power margin/buffer size information. The mobile station then transmits a TFCI indicating the TFC at point t3. Also, when the mobile station determines a TFC different from the TFC pointer (that is, a TFC smaller than the TFC pointer), the mobile station transmits power margin/buffer size information at almost the same time as point t3.

The base station receives TFCI information and power margin/buffer size information at point t4. If only TFCI information is received, the base station determines whether or not the mobile station' s TFC pointer and the base station' s own TFC pointer match by comparing the TFCI with the base station's own TFC pointer. If it is determined that these TFC pointers match, the base station generates an up/down/keep signal based on the size relationship between newly determined TFC pointer and the TFC pointer at the previous time, and transmits the up/down/keep signal at point t5. On the other hand, if it is determined that there is a difference between the mobile station's TFC pointer and the base station's TFC pointer, the base station transmits a TFC pointer signal (TFC number) at point t5.

If, on the other hand, both TFCI information and power margin/buffer size information are received at point t4, the base station references the power margin/buffer size information and checks whether or not the TFC of the mobile station was generated on the basis of an incorrect TFC pointer. If it is determined that the mobile station's TFC pointer is not incorrect the base station transmits an up/down/keep signal at point t5, and if it is determined that the mobile station's TFC pointer is incorrect the base station transmits a TFC pointer signal (TFC number) instead of an up/down/keep signal.

On receiving an up/down/keep signal or TFC pointer signal at point 6, the mobile station updates the TFC pointer based on that signal.

Thus, according to this embodiment, radio base station apparatus 300 sends its own TFC pointer signal to communication terminal apparatus 400 only when radio base station apparatus 300 determines that the TFC pointer of communication terminal apparatus 400 is different, thus enabling a TFC pointer signal to be sent only when actually necessary, and making it possible to make the TFC pointers of both stations certainly match while minimizing an increase in the amount of transmitted information.

### (Embodiment 3)

A special feature of this embodiment is that a communication terminal apparatus sends a flag signal indicating whether that communication terminal apparatus has selected a TFC that is the same as the TFC pointer of that communication terminal apparatus or has selected a different TFC to a radio base station apparatus together with a TFCI, and the radio base station apparatus determines whether the TFC pointer of the radio communication apparatus matches the TFC pointer of the radio base station apparatus itself based on this flag signal and the TFCI, and transmits a TFC pointer signal to the communication terminal apparatus only if the TFC pointers are different.

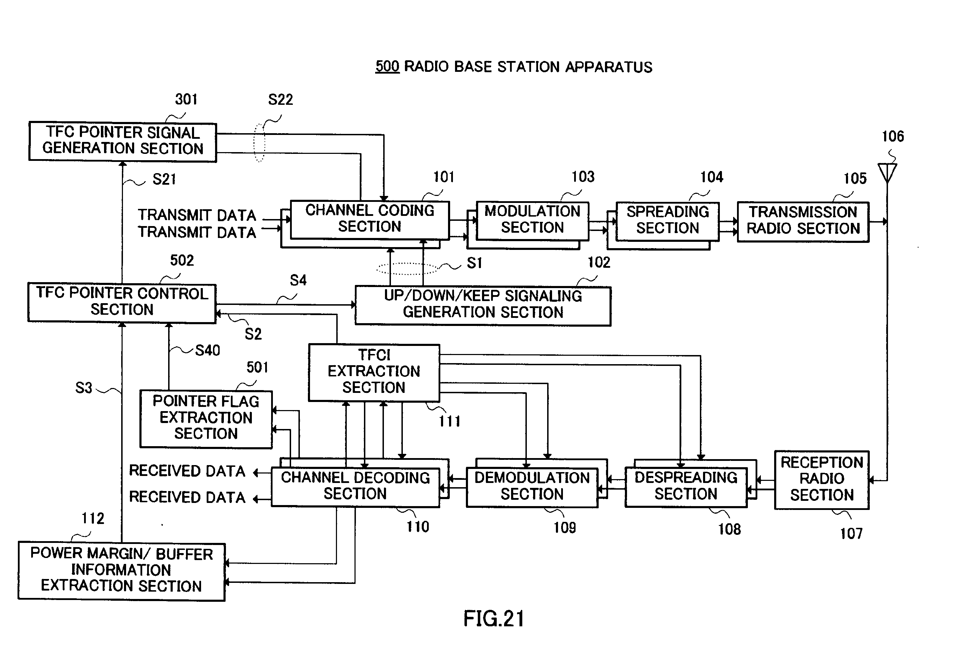

FIG.21, in which parts corresponding to those in FIG.11 are assigned the same codes as in FIG. 11, shows the configuration of a radio base station apparatus of this embodiment. Radio base station apparatus 500 has a similar configuration to radio base station apparatus 300 in FIG.11, except in that it has a pointer flag extraction section 501 and that the configuration of the TFC pointer control section 502 is different. Pointer flag extraction section 501 extracts pointer flag information S40 indicating whether or not a communication terminal apparatus is using a TFC that is the same as the TFC pointer, and sends this pointer flag information S40 to TFC pointer control section 502.

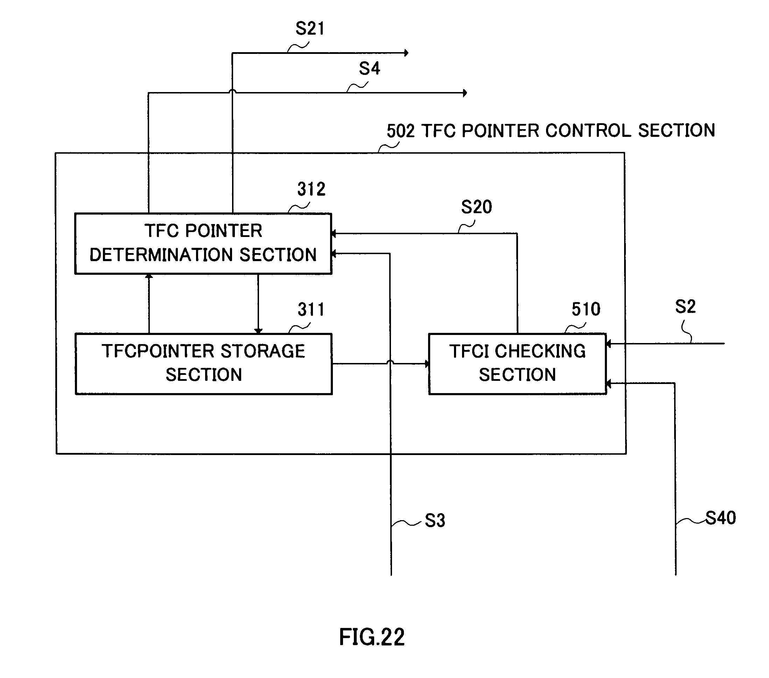

FIG.22 shows the configuration of TFC pointer control section 302. In FIG. 22, in which parts corresponding to those in FIG.12 are assigned the same codes as in FIG.12, TFCI information S2 and pointer flag information S40 are input to a TFCI checking section 510 of TFC pointer control section 502. If the pointer flag information is "1" (indicating that a TFC that is the same as the TFC pointer has been selected by the communication terminal apparatus), TFCI checking section 510 compares the TFC indicated by the TFCI with the TFC pointer of radio base station apparatus 500 itself stored in TFC pointer storage section 311, and if these match, sends a determination result S20 to TFC pointer determination section 312 directing output of TFC pointer control signal S4. On the other hand, if the TFC indicated by the TFCI and the TFC pointer of radio base station apparatus 500 itself stored in TFC pointer storage section 311 do not match, TFCI checking section 510 sends a determination result S20 to TFC pointer determination section 312 directing output of TFC pointer information S21.

If the pointer flag information is "-1" (indicating that a TFC that is different from the TFC pointer has been selected by the communication terminal apparatus), TFCI checking section 510 compares the TFC indicated by the TFCI with the TFC pointer of radio base station apparatus 500 itself stored in TFC pointer storage section 311, and if these match, sends a determination result S20 to TFC pointer determination section 312 directing output of TFC pointer information S21. On the other hand, if the TFC indicated by the TFCI and the TFC pointer of radio base station apparatus 500 itself stored in TFC pointer storage section 311 do not match, and the TFC indicated by the TFCI is greater than the TFC pointer of radio base station apparatus 500 itself stored in TFC pointer storage section 311 (that is, the transmission rate is higher), TFCI checking section 510 sends a determination result S20 to TFC pointer determination section 312 directing output of TFC pointer information S21. Conversely, if the TFC indicated by the TFCI and the TFC pointer of radio base station apparatus 500 itself stored in TFC pointer storage section 311 do not match, and the TFC indicated by the TFCI is smaller than the TFC pointer of radio base station apparatus 500 itself stored in TFC pointer storage section 311 (that is, the transmission rate is lower), TFCI checking section 510 sends a determination result S20 to TFC pointer determination section 312 directing output of TFC pointer control signal S4 (because there is no problem even if the transmission rate itself is lower, and the base station cannot determine if the TFC pointer of the mobile station is incorrect) .

That is to say, radio base station apparatus 500 transmits an up/down/keep signal when the pointer flag information is "1" and the TFC pointer held by radio base station apparatus 500 and the TFC of the TFCI match, or when the pointer flag information is "-1" and the TFC indicated by the TFCI is smaller than the TFC pointer held by radio base station apparatus 500 (that is, the transmission rate is lower), and sends a TFC pointer signal (TFC number) otherwise.

By this means, it is possible to send a TFC pointer signal only when actually necessary. Also, by using a pointer flag signal to determine whether a TFC pointer signal is to be sent or an up/down/keep signal is to be sent, determination of whether a TFC pointer signal is to be sent or an up/down/keep signal is to be sent can be performed more easily than in the case of Embodiment 2.

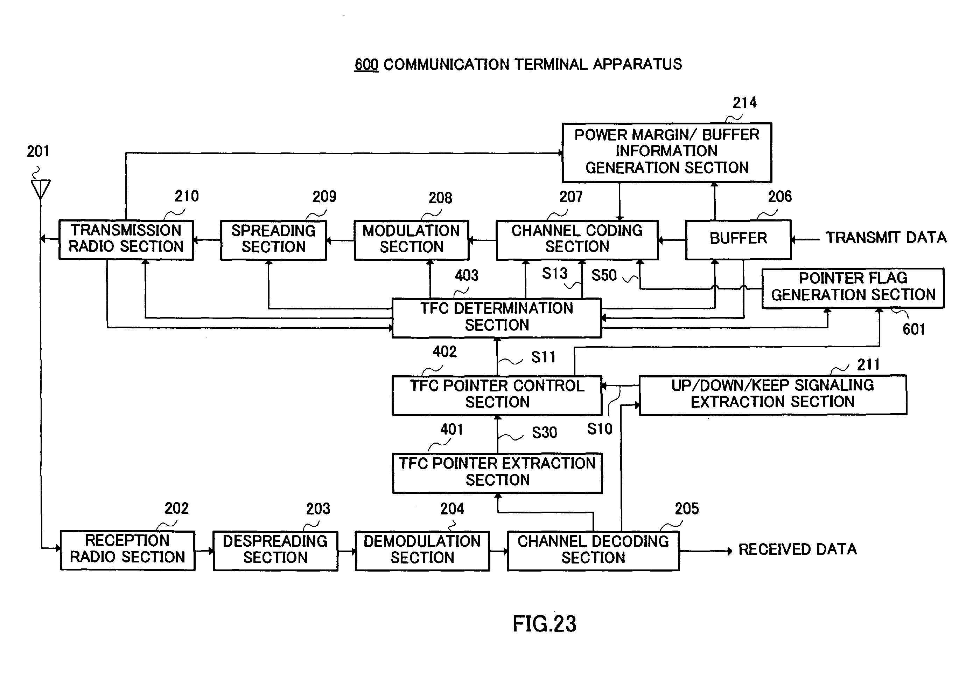

FIG.23, in which parts corresponding to those in FIG.13 are assigned the same codes as in FIG.13, shows the configuration of a communication terminal apparatus of this embodiment that performs communication with radio base station apparatus 500. Communication terminal apparatus 600 has a pointer flag generation section 601. Pointer flag generation section 601 generates a "1" flag signal when TFC pointer information stored in TFC pointer control section 402 and a TFC determined by TFC determination section 403 match, and generates a "-1" flag signal when these do not match. Pointer flag generation section 601 sends generated pointer flag information S50 to channel coding section 207. By this means, a pointer flag signal is transmitted from communication terminal apparatus 600.

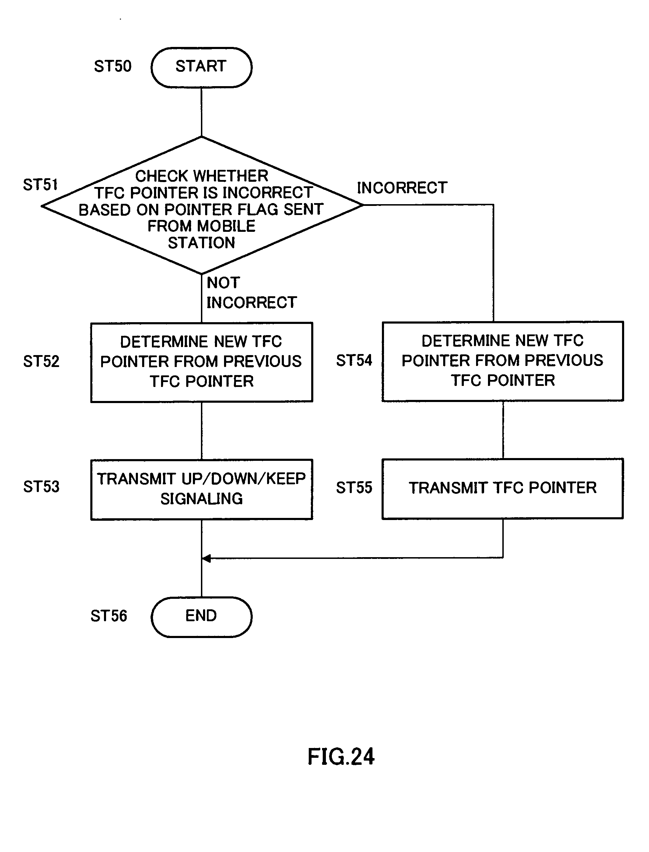

Next, TFC pointer adjustment operations by radio base station apparatus 500 and communication terminal apparatus 600 of this embodiment will be described. FIG.24 shows an adjustment operation by radio basestation apparatus 500. When radio base station apparatus 500 starts an adjustment operation in step ST50, in step ST51 TFCI checking section 510 (FIG.22) checks whether or not the TFC pointer of communication terminal apparatus (mobile station) 600 is incorrect based on a pointer flag signal and TFCI sent from the mobile station. In the case of this embodiment, as described above, the mobile station's TFC pointer is determined not to be incorrect only when the pointer flag information is "1" and the TFC pointer held by radio base station apparatus 500 and the TFC of the TFCI match, or when the pointer flag information is "-1" and the TFC indicated by the TFCI is smaller than the TFC pointer held by radio base station apparatus 500 (that is, the transmission rate is lower), and is determined to be incorrect otherwise.

If radio base station apparatus 500 determines in step ST51 that the mobile station's TFC pointer is not incorrect, the processing flow proceeds to step ST52, and TFC pointer determination section 312 determines a new TFC pointer from the previous TFC pointer held by radio base station apparatus 500. The processing flow then proceeds to following step ST53,
in which TFC pointer determination section 312 compares the new TFC pointer and the previous TFC pointer, generates an up/down/keep signal based on the result of this comparison, and transmits the up/down/keep signal.

If, on the other hand, it is determined in step ST51 that the mobile station's TFC pointer is incorrect, the processing flow proceeds to step ST54, and TFC pointer determination section 312 determines a new TFC pointer from the previous TFC pointer held by radio base station apparatus 500. Then a TFC pointer signal is transmitted in following step ST55. After step ST53 or step ST55, radio base station apparatus 500 terminates the TFC pointer adjustment operation in step ST56.

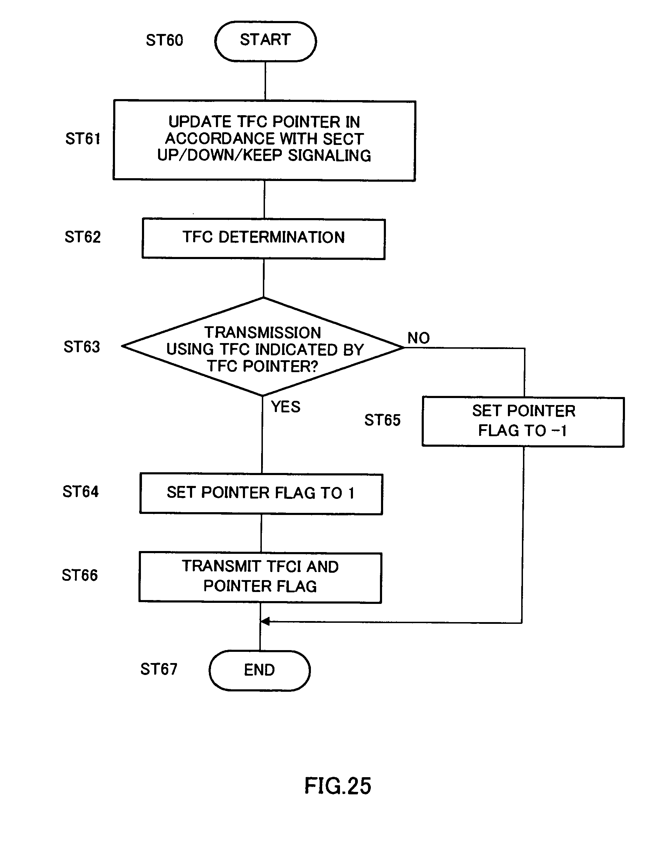

FIG.25 shows a pointer flag creation operation by communication terminal apparatus 600. When communication terminal apparatus 600 starts an adjustment operation in step ST60, in step ST61 TFC pointer control section 402 updates the TFC pointer in accordance with an up/down/keep signal sent from radio base station apparatus 500, and the processing flow then proceeds to step ST62. In step ST62 a TFC not exceeding the TFC pointer is determined, and the processing flow then proceeds to step ST63.

In step ST63, it is judged whether or not a TFC that is the same as the TFC indicated by the TFC pointer has been determined. Then, if the TFC is the same as the TFC pointer the processing flow proceeds to step ST64 and the pointer flag signal is set to "1", and if the TFC is different from the TFC pointer the processing flowproceeds to step ST65 and the pointer flag signal is set to "-1". After a pointer flag has been generated in step ST63 or step ST64, communication terminal apparatus 600 transmits the TFCI and pointer flag in step ST66, and terminates the pointer flag creation operation in step ST67.

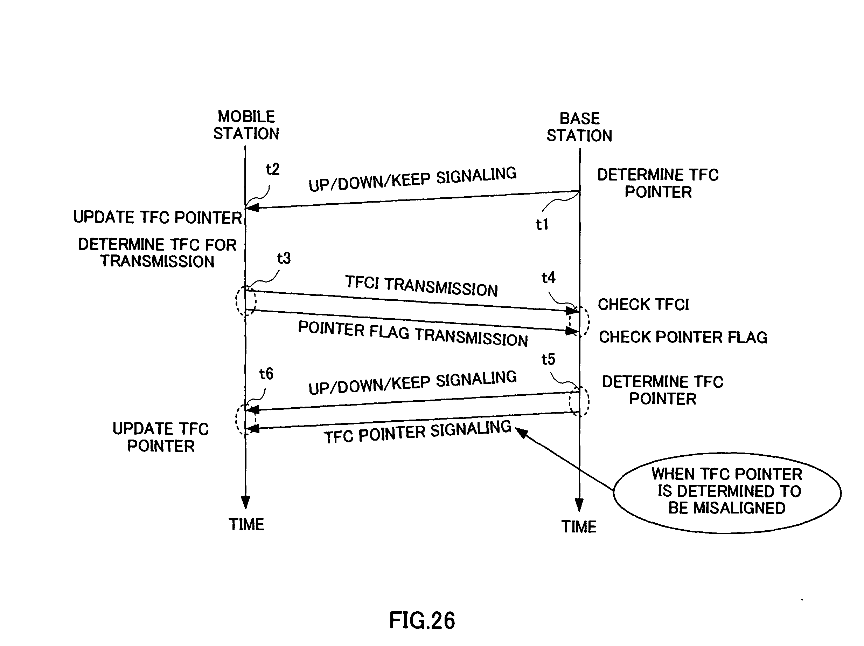

FIG.26 illustrates the adjustment of TFC pointers of radio base station apparatus (base station) 500 and communication terminal apparatus (mobile station) 600 according to this embodiment. First, before the kind of transmission/reception shown in FIG.26 is started, it is assumed that the base station notifies the mobile station of a TFC number that indicates a TFC pointer, and that the TFC pointers of both stations match. The base station determines a new TFC pointer before point t1, and at point t1 transmits an up/down/keep signal based on the size relationship between the previous TFC pointer and the new TFC pointer.

On receiving this up/down/keep signal at point t2, the mobile station updates the TFC pointer based on the up/down/keep signal, and determines a TFC not exceeding this TFC pointer based on power margin/buffer size information. The mobile station then transmits a pointer flag signal together with a TFCI at point t3.

The base station receives the TFCI information and pointer flag signal at point t4. The base station determines whether or not the mobile station's TFC pointer and the base station's own TFC pointer match based on the pointer flag signal and TCFI. The base station transmits an up/down/keep signal at point t5 if it is determined that the TFC pointers match, or transmits TFC pointer information at point t5 if it is determined that the TFC pointers do not match.

On receiving an up/down/keep signal or TFC pointer information at point 6, the mobile station updates its TFC pointer based on that signal.

Thus, according to this embodiment, communication terminal apparatus 600 transmits a flag signal indicating whether it has selected a TFC that is the same as its TFC pointer or has selected a different TFC to a base station together with a TFCI, and radio base station apparatus 500 determines whether the TFC pointer of communication terminal apparatus 600 and the TFC pointer of radio base station apparatus 500 itself match based on this flag signal and TFCI, and transmits a TFC pointer signal (TFC number) to communication terminal apparatus 600 only when these TFC pointers differ, thus enabling the TFC pointers of radio base station apparatus 500 and communication terminal apparatus 600 to be made to match easily and certainly while minimizing an increase in the amount of transmitted information.

### (Other Embodiments)

In addition to the above-described embodiments, radio base station apparatus 100/300/500 may transmit a keep signal to communication terminal apparatus 200/400/600 in the period up to transmission of the next up/down/keep signal based on a TFCI after receiving that TFCI. If this is done, a communication terminal apparatus 200/400/600 TFC pointer is not changed while TFC pointer adjustment is being carried out between radio base station apparatus 100/300/500 and communication terminal apparatus 200/400/600, enabling TFC pointer difference to be prevented during this period.

The present invention is not limited to the above-described embodiments, and various variations and modifications may be possible without departing from the scope of the present invention.

One aspect of a radio communication method of the present invention is a radio communication method whereby a communication terminal apparatus sets a TFC (Transport Format Combination) pointer based on an up/down/keep signal from a radio base station apparatus, and performs uplink transmission based on a TFC indicating a transmission rate not exceeding this TFC pointer, wherein TFC pointers of the communication terminal apparatus and radio base station apparatus are made to match using a TFCI (Transmit Format Combination Indicator) transmitted from the communication terminal apparatus.

According to this method, since a TFCI is transmitted from a communication terminal apparatus to a radio base station apparatus, both the communication terminal apparatus and the radio base station apparatus recognize a TFC indicated by the TFCI. Then since the TFC pointers of both stations are made to match based on that TFC recognized by both stations, the TFC pointers of both stations can be made to certainly match even if an up/down/keep signal is received erroneously by the communication terminal apparatus and the TFC pointer of the communication terminal apparatus and the TFC pointer of the radio base station apparatus become different. Also, since a known TFCI is used, the TFC pointers can be made to match without increasing the amount of communicated information. Furthermore, since a TCFI is generally transmitted with error correction coding having been executed, there is a high probability of error-free reception even in a radio wave propagation environment conducive to the occurrence of reception errors in an up/down/keep signal, enabling TFC pointers to be made to match with a high degree of reliability.

One aspect of a radio communication method of the present invention includes a TFC determination step (ST22) in which a communication terminal apparatus determines a TFC, a step (ST25) in which the communication terminal apparatus makes its own TFC pointer match the TFC determined in the TFC determination step (ST22), a TFCI transmission step (ST24) in which the communication terminal apparatus transmits a TFCI indicating the determined TFC to the radio base station apparatus, a TFC pointer updating step (ST14) in which the radio base station apparatus updates its own TFC pointer to the TFC indicated by the TFCI, and steps (ST12, ST15, ST13) in which the radio base station apparatus finds a new TFC pointer, forms an up/down/keep signal for controlling the TFC pointer of the communication terminal apparatus by comparing this new TFC pointer with the aforementioned updated TFC pointer, and transmits this up/down/keep signal.

According to this method, the TFC pointer of a communication terminal apparatus and the TFC pointer of a radio base station apparatus are made to match (ST25, ST14), enabling the TFC pointers of both stations to be made to match, even if an up/down/keep signal is received erroneously by the communication terminal apparatus and the TFC pointer of the communication terminal apparatus and the TFC pointer of the radio base station apparatus become different. Furthermore, since the up/down/keep signal is also formed based on matched TFC pointers, the TFC pointers of both stations do not become different. Even if this up/down/keep signal is received erroneously, TFC pointer difference can be corrected by repeating the same kind of processing.

One aspect of a radio communication method of the present invention includes a TFC determination step (ST42) in which a communication terminal apparatus determines a TFC, TFCI transmission steps (ST44, ST45) in which the communication terminal apparatus transmits to the radio base station apparatus information constituting the basis for determining the TFC in addition to a TFCI indicating the determined TFC, a step (ST34) in which the radio base station apparatus determines whether or not the TFC pointer of the communication terminal apparatus is different from its own TFC pointer based on the TFC of the communication terminal apparatus and information constituting the basis thereof, and a step (ST36) in which, if the radio base station apparatus determines that the TFC pointer of the communication terminal apparatus is different, the radio base station apparatus transmits its own TFC pointer information to the communication terminal apparatus.

According to this method, since a communication terminal apparatus transmits to a radio base station apparatus information constituting the basis for determining a TFC in addition to a TFCI, the radio base station apparatus can determine whether or not the TFC pointer of the communication terminal apparatus is different from the TFC pointer of the radio base station apparatus itself. Also, since the radio base station apparatus transmits TFC pointer information only when the radio base station apparatus determines that the TFC pointer is different, it is possible to transmit TFC pointer information only when actually necessary. As a result, even if an up/down/keep signal is received erroneously by the communication terminal apparatus and the TFC pointer of the communication terminal apparatus and the TFC pointer of the radio base station apparatus become different, the TFC pointers of both stations can be made to match with the minimum necessary additional information.

One aspect of a radio communication method of the present invention includes a TFC determination step (ST62) in which a communication terminal apparatus determines a TFC, a step (ST66) in which the communication terminal apparatus transmits to the radio base station apparatus a flag signal indicating whether or not the TFC pointer of the communication terminal apparatus itself and the TFC determined in the determination step (ST62) match in addition to a TFCI indicating the determined TFC, a step (ST51) in which the radio base station apparatus determines whether or not the TFC pointer of the communication terminal apparatus is different from its own TFC pointer based on the aforementioned TFCI and flag signal, and a step (ST55) in which, if the radio base station apparatus determines that the TFC pointer of the communication terminal apparatus is different, the radio base station apparatus transmits its own TFC pointer information to the communication terminal apparatus.

According to this method, since a communication terminal apparatus transmits to a radio base station apparatus a flag signal indicating whether or not the TFC pointer of the communication terminal apparatus itself and the TFC determined in the determination step (ST62) match in addition to a TFCI, the radio base station apparatus can determine whether or not the TFC pointer of the communication terminal apparatus is different from the TFC pointer of the radio base station apparatus itself. Also, since the radio base station apparatus transmits TFC pointer information only when the radio base station apparatus determines that the TFC pointer is different, it is possible to transmit TFC pointer information only when actuallynecessary. As a result, even if anup/down/keep signal is received erroneously by the communication terminal apparatus and the TFC pointer of the communication terminal apparatus and the TFC pointer of the radio base station apparatus become different, the TFC pointers of both stations can be made to match with the minimum necessary additional information.

According to one aspect of a radio communication method of the present invention, a radio base station apparatus transmits a keep signal to a communication terminal apparatus in the period up to transmission of a signal for controlling the TFC pointer of the communication terminal apparatus after receiving a TFCI from the communication terminal apparatus.

According to this method, the position of the TFC pointer in a communication terminal apparatus is maintained in the period up to reception of a signal for controlling the TFC pointer after transmission of a TFCI, making it possible to prevent the TFC pointer of the communication terminal apparatus from being different while a signal for controlling the TFC pointer is formed by the radio base station apparatus, and enabling the TFC pointer of the communication terminal apparatus to be certainly made to match with the TFC pointer of radio base station apparatus by means of the signal for controlling the TFC pointer.

One aspect of a radio communication system of the present invention is a radio communication system in which a communication terminal apparatus changes a TFC pointer based on an up/down/keep signal from a radio base station apparatus, selects a TFC that indicates a transmission rate not exceeding this TFC pointer, and performs uplink transmission based on the selected TFC, wherein the communication terminal apparatus transmits a TFCI indicating the selected TFC to the radio base station apparatus, and the radio base station apparatus references the TFC indicated by the TFCI and forms a signal for changing the TFC pointer such as the aforementioned up/down/keep signal or a TFC pointer information signal, and transmits this signal for changing the TFC pointer to the communication terminal apparatus.

One aspect of a radio base station apparatus of the present invention employs a configuration comprising a TFCI (Transmit Format Combination Indicator) extraction section that extracts a TFCI transmitted from a communication terminal apparatus, an up/down/keep signal forming section that references the extracted TFCI and forms an up/down/keep signal for changing the TFC (Transport Format Combination) pointer of the communication terminal apparatus, and a transmission section that performs radio transmission of the up/down/keep signal.

According to these configurations, since a radio base station apparatus references a TFC indicated by a TFCI, forms an up/down/keep signal, and transmits this signal to a communication terminal apparatus, the TFC pointers of both stations can be made to match even if the up/down/keep signal is received erroneously by the communication terminal apparatus and the TFC pointer of the communication terminal apparatus and the TFC pointer of the radio base station apparatus become different. Also, since a known TFCI is used, the TFC pointers can be made to match without increasing the amount of communicated information. Furthermore, since a TCFI is generally transmitted with error correction coding having been executed, there is a high probability of error-free reception even in a radio wave propagation environment conducive to the occurrence of receive errors in an up/down/keep signal, enabling TFC pointers to be made to match with a high degree of reliability.

One aspect of a radio base station apparatus of the present invention employs a configuration further comprising a TFCI checking section that checks whether or not the TFC pointer of the radio base station apparatus is different from the TFC indicated by the aforementioned TFCI, and if the TFC pointer of the radio base station apparatus is different from the TFC indicated by the aforementioned TFCI, updates the TFC pointer of the radio base station apparatus to the TFC indicated by the TFCI, and a TFC pointer determination section that generates a control signal for forming the aforementioned up/down/keep signal by comparing this updated TFC pointer with a new TFC pointer.

One aspect of a radio base station apparatus of the present invention employs a configuration further comprising a power margin/buffer information extraction section that extracts power margin information and/or buffer size information transmitted from a communication terminal apparatus, a TFCI checking section that determines whether or not a TFC pointer of the communication terminal apparatus is different from the TFC pointer of the radio base station apparatus itself based on the TFC indicated by the aforementioned TFCI and the aforementioned power margin information and/or buffer size information constituting the basis thereof, and a TFC pointer transmission section that transmits TFC pointer information of the radio base station apparatus to the communication terminal apparatus if the TFC pointer of the radio base station apparatus is different from the TFC indicated by the aforementioned TFCI.

One aspect of a radio base station apparatus of the present invention employs a configuration further comprising a pointer flag extraction section that extracts a flag signal indicating whether or not a TFC pointer of a communication terminal apparatus and a TFC determined by the communication terminal apparatus transmitted from the communication terminal apparatus match, a TFCI checking section that determines whether or not the TFC pointer of the communication terminal apparatus is different from the TFC pointer of the radio base station apparatus itself based on the aforementioned TFCI and flag signal, and a TFC pointer transmission section that transmits TFC pointer information of the radio base station apparatus to the communication terminal apparatus if the TFC pointer of the communication terminal apparatus is determined to be different.

One aspect of a communication terminal apparatus of the present invention employs a configuration comprising a TFC determination section that determines a TFC indicating a transmission rate not exceeding a TFC pointer, a TFC pointer control section that updates the TFC pointer based on an up/down/keep signal from a radio base station apparatus and also performs updating by matching with a TFC determined by the aforementioned TFC determination section, and a TFCI transmission section that transmits a TFCI indicating the TFC determined by the aforementioned TFC determination section to the radio base station apparatus.

One aspect of a communication terminal apparatus of the present invention employs a configuration comprising a TFC determination section that determines a TFC indicating a transmission rate not exceeding a TFC pointer, a TFC comparison section that determines whether or not the TFC determined by the aforementioned TFC determination section and the TFC pointer of the communication terminal apparatus match, and a transmission section that, if the determined TFC and the TFC pointer of the communication terminal apparatus do not match, transmits to a radio base station apparatus a TFCI indicating the TFC determined by the aforementioned TFC determination section and also information constituting the basis for determining the TFC.

One aspect of a communication terminal apparatus of the present invention employs a configuration comprising a TFC determination section that determines a TFC indicating a transmission rate not exceeding a TFC pointer, a TFC comparison section that determines whether or not the TFC determined by the aforementioned TFC determination section and the TFC pointer of the communication terminal apparatus match, and a transmission section that transmits to a radio base station apparatus a TFCI indicating the TFC determined by the aforementioned TFC determination section and also a pointer flag signal indicating whether or not the determined TFC and the TFC pointer of the communication terminal apparatus match.

As described above, according to the present invention a radio communicationmethod, radio communication system, radio base station apparatus, and communication terminal apparatus can be realized that enable a TFC pointer of a communication terminal apparatus to be made to match a TFC pointer of a radio base station apparatus by using known information effectively even when an up/down/keep signal is received erroneously by the communication terminal apparatus.

This application is based on Japanese Patent Application No.2003-299122 filed on August 22, 2003, the entire content of which is expressly incorporated by reference herein.

### Industrial Applicability

The present invention is suitable for application to a radio communication system requiring TFC pointers of a base station apparatus and communication terminal to be made to match, and can be applied, for example, to mobile phones and base stations.
[FIG. 1B]
   NUMBER OF BITS (TRANSMISSION RATE)
[FIG.1C]
   TRANSMISSION POWER (TRANSMISSION RATE)
[FIG.2]
   TFC POINTER
   TRANSMISSION POWER (TRANSMISSION RATE)
[FIG.3]
   100 RADIO BASE STATION APPARATUS
      TRANSMIT DATA
      TRANSMIT DATA
   101 CHANNEL CODING SECTION
   102 UP/DOWN/KEEP SIGNALING GENERATION SECTION
   103 MODULATION SECTION
   104 SPREADING SECTION
   105 TRANSMISSION RADIO SECTION
   107 RECEPTION RADIO SECTION
   108 DESPREADING SECTION
   109 DEMODULATION SECTION
   110 CHANNEL DECODING SECTION
      RECEIVED DATA
      RECEIVED DATA
   111 TFCI EXTRACTION SECTION
   112 POWER MARGIN/BUFFER INFORMATION EXTRACTION SECTION
   113 TFC POINTER CONTROL SECTION
[FIG.4]
   113 TFC POINTER CONTROL SECTION
   120 TFCI CHECKING SECTION
   121 TFC POINTER STORAGE SECTION
   122 TFC POINTER DETERMINATION SECTION
[FIG.5]
   200 COMMUNICATION TERMINAL APPARATUS
   202 RECEPTION RADIO SECTION
   203 DESPREADING SECTION
   204 DEMODULATION SECTION
   205 CHANNEL DECODING SECTION
      RECEIVED DATA
      TRANSMIT DATA
   206 BUFFER
   207 CHANNEL CODING SECTION
   208 MODULATION SECTION
   209 SPREADING SECTION
   210 TRANSMISSION RADIO SECTION
   211 UP/DOWN/KEEP SIGNALING EXTRACTION SECTION
   212 TFC POINTER CONTROL SECTION
   213 TFC DETERMINATION SECTION
   214 POWER MARGIN/BUFFER INFORMATION GENERATION SECTION
[FIG.6]
   212 TFC POINTER CONTROL SECTION
   220 TFC POINTER UPDATING SECTION
   221 TFC POINTER STORAGE SECTION
[FIG.7]
   ST10 START
   ST11 IS TFC INDICATED BY TFCI SENT FROMMOBILE STATION DIFFERENT FROM TFC OF TFC POINTER?
   ST12 DETERMINE NEW TFC POINTER FROM PREVIOUS TFC POINTER
   ST13 TRANSMIT UP/DOWN/KEEP SIGNALING
   ST14 CORRECT TFC POINTER TO TFC INDICATED BY SENT TFCI
   ST15 DETERMINE NEW TFC POINTER FROM CORRECTED TFC POINTER
   ST16 END
[FIG.8]
   ST20 START
   ST21 UPDATE TFC POINTER IN ACCORDANCE WITH SENT UP/DOWN/KEEP SIGNALING
   ST22 TFC DETERMINATION
   ST23 TRANSMISSION USING TFC INDICATED BY TFC POINTER?
   ST24 TRANSMIT TFCI
   ST25 UPDATE TFC POINTER WITH TFC FOR TRANSMISSION
   ST26 END
[FIG.9]
   MOBILE STATION
   BASE STATION
   t1
      DETERMINE TFC POINTER
      UP/DOWN/KEEP SIGNALING
   t2
      (RECEIVE ERROR OCCURRENCE)
      UPDATE TFC POINTER
      DETERMINE TFC FOR TRANSMISSION
      UPDATE TFC POINTER
      (CHANGE TFC POINTER TO TFC FOR TRANSMISSION)
   t3
      TFCI TRANSMISSION
   t4
      (MAKE SAME AS CHANGED TFC POINTER)
      CHECK TFCI
      UPDATE TFC POINTER
      DETERMINE TFC POINTER
   t5
      UP/DOWN/KEEP SIGNALING
   t6
      UPDATE TFC POINTER
      TIME
      TIME
[FIG. 10]
   MOBILE STATION
   BASE STATION
   t1
      DETERMINE TFC POINTER
      UP/DOWN/KEEP SIGNALING
   t2
      (RECEIVE ERROR OCCURRENCE)
      (OCCURRENCE OF DIFFERENCE FROM BASE STATION TFC)
      UPDATE TFC POINTER
      DETERMINE TFC FOR TRANSMISSION
   t3
      TFCI TRANSMISSION
   t4
      RECEIVE TFCI
   t5
      DETERMINE TFC POINTER
      (TFC POINTER DIFFERENCE CANNOT BE CORRECTED)
      UP/DOWN/KEEP SIGNALING
   t6
      UPDATE TFC POINTER
      (DIFFERENCE FROM BASE STATION TFC POINTER CONTINUES TO BE MAINTAINED)
      TIME
      TIME
[FIG.11]
   300 RADIO BASE STATION APPARATUS
   TRANSMIT DATA
   TRANSMIT DATA
   101 CHANNEL CODING SECTION
   102 UP/DOWN/KEEP SIGNALING GENERATION SECTION
   103 MODULATION SECTION
   104 SPREADING SECTION
   105 TRANSMISSION RADIO SECTION
   107 RECEPTION RADIO SECTION
   108 DESPREADING SECTION
   109 DEMODULATION SECTION
   110 CHANNEL DECODING SECTION
      RECEIVED DATA
      RECEIVED DATA
   111 TFCI EXTRACTION SECTION
   112 POWER MARGIN/BUFFER INFORMATION EXTRACTION SECTION
   301 TFC POINTER SIGNAL GENERATION SECTION
   302 TFC POINTER CONTROL SECTION
[FIG.12]
   302 TFC POINTER CONTROL SECTION
   310 TFCI CHECKING SECTION
   311 TFC POINTER STORAGE SECTION
   312 TFC POINTER DETERMINATION SECTION
[FIG. 13]
   400 COMMUNICATION TERMINAL APPARATUS
   202 RECEPTION RADIO SECTION
   203 DESPREADING SECTION
   204 DEMODULATION SECTION
   205 CHANNEL DECODING SECTION
      RECEIVED DATA
      TRANSMIT DATA
   206 BUFFER
   207 CHANNEL CODING SECTION
   208 MODULATION SECTION
   209 SPREADING SECTION
   210 TRANSMISSION RADIO SECTION
   211 UP/DOWN/KEEP SIGNALING EXTRACTION SECTION
   401 TFC POINTER EXTRACTION SECTION
   402 TFC POINTER CONTROL SECTION
   403 TFC DETERMINATION SECTION
   214 POWER MARGIN/BUFFER INFORMATION GENERATION SECTION
[FIG.14]
   402 TFC POINTER CONTROL SECTION
   410 TFC POINTER UPDATING SECTION
   411 TFC POINTER STORAGE SECTION
[FIG. 15]
   403 TFC DETERMINATION SECTION
   FROM BUFFER, TRANSMISSION RADIO SECTION
   420 TFC SELECTION SECTION
      TO TRANSMISSION RADIO SECTION, SPREADING SECTION, MODULATION SECTION, CHANNEL CODING SECTION, BUFFER
   421 TFC COMPARISON SECTION
      TO POWER MARGIN/BUFFER INFORMATION GENERATION SECTION
[FIG.16A]
   TFC INDICATED BY TFC POINTER OF BASE STATION, TFC INDICATED BY TFC POINTER OF MOBILE STATION (*1)
   TFC INDICATED BY TFC POINTER OF MOBILE STATION (*2)
   TFC SELECTED BY MOBILE STATION
[FIG.16B]
   TFC INDICATED BY TFC POINTER OF MOBILE STATION (*2)
   TFC INDICATED BY TFC POINTER OF BASE STATION, TFC SELECTED BY MOBILE STATION, TFC INDICATED BY TFC POINTER OF MOBILE STATION (*1)
[FIG.16C]
   TFC INDICATED BY TFC POINTER OF MOBILE STATION (*2)
   TFC SELECTED BY MOBILE STATION
   TFC INDICATED BY TFC POINTER OF BASE STATION
[FIG.16D]
   TFC INDICATED BY TFC POINTER OF BASE STATION
   TFC INDICATED BY TFC POINTER OFMOBILE STATION (*2), TFC SELECTED BY MOBILE STATION
[FIG.17A]
   TFC INDICATED BY TFC POINTER OF BASE STATION, TFC INDICATED BY TFC POINTER OF MOBILE STATION (*1)
   TFC INDICATED BY TFC POINTER OF MOBILE STATION (*2)
   TFC SELECTED BY MOBILE STATION
[FIG.17B]
   TFC INDICATED BY TFC POINTER OF MOBILE STATION (*2)
   TFC INDICATED BY TFC POINTER OF BASE STATION, TFC SELECTED BY MOBILE STATION, TFC INDICATED BY TFC POINTER OF MOBILE STATION (*1)
[FIG.17C]
   TFC INDICATED BY TFC POINTER OF MOBILE STATION (*2)
   TFC SELECTED BY MOBILE STATION
   TFC INDICATED BY TFC POINTER OF BASE STATION
[FIG. 17D]
   TFC INDICATED BY TFC POINTER OF BASE STATION
   TFC INDICATED BY TFC POINTER OFMOBILE STATION (*2), TFC SELECTED BY MOBILE STATION
[FIG.18]
   ST30 START
   ST31 IS TFC INDICATED BY TFCI SENT FROMMOBILE STATION DIFFERENT FROM TFC OF TFC POINTER?
   ST32 DETERMINE NEW TFC POINTER FROM PREVIOUS TFC POINTER
   ST33 TRANSMIT UP/DOWN/KEEP SIGNALING
   ST34 BASED ON SENT POWER MARGIN/BUFFER SIZE INFORMATION, CHECK WHETHER TFC INDICATED BY TFCI WAS GENERATED ON BASIS OF INCORRECT TFC POINTER
      INCORRECT
      NOT INCORRECT
   ST35 DETERMINE NEW TFC POINTER FROM PREVIOUS TFC POINTER
   ST36 TRANSMIT TFC POINTER
   ST37 END
[FIG. 19]
   ST40 START
   ST41 UPDATE TFC POINTER IN ACCORDANCE WITH SENT UP/DOWN/KEEP SIGNALING
   ST42 TFC DETERMINATION
   ST43 TRANSMISSION USING TFC INDICATED BY TFC POINTER?
   ST44 TRANSMIT TFCI
   ST45 TRANSMIT POWER MARGIN/BUFFER SIZE INFORMATION
   ST46 END
[FIG.20]
   MOBILE STATION
   BASE STATION
   t1
      DETERMINE TFC POINTER
      UP/DOWN/KEEP SIGNALING
   t2
      UPDATE TFC POINTER
      DETERMINE TFC FOR TRANSMISSION
   t3
      TFCI TRANSMISSION
      POWER MARGIN/BUFFER SIZE INFORMATION TRANSMISSION
      (ALWAYS SENT WHEN DETERMINED TFC AND TFC POINTER ARE DIFFERENT)
   t4
      CHECK TFCI
      CHECK POWER MARGIN/BUFFER SIZE INFORMATION AND TFC
   t5
      DETERMINE TFC POINTER
      UP/DOWN/KEEP SIGNALING
      TFC POINTER SIGNALING
      (WHEN TFC POINTER IS DETERMINED TO BE DIFFERENT)
   t6
      UPDATE TFC POINTER
      TIME
      TIME
[FIG.21]
   500 RADIO BASE STATION APPARATUS
      TRANSMIT DATA
      TRANSMIT DATA
      101 CHANNEL CODING SECTION
      102 UP/DOWN/KEEP SIGNALING GENERATION SECTION
      103 MODULATION SECTION
      104 SPREADING SECTION
      105 TRANSMISSION RADIO SECTION
      107 RECEPTION RADIO SECTION
      108 DESPREADING SECTION
      109 DEMODULATION SECTION
      110 CHANNEL DECODING SECTION
         RECEIVED DATA
         RECEIVED DATA
      111 TFCI EXTRACTION SECTION
      112 POWER MARGIN/BUFFER INFORMATION EXTRACTION SECTION
   501 POINTER FLAG EXTRACTION SECTION
   502 TFC POINTER CONTROL SECTION
   301 TFC POINTER SIGNAL GENERATION SECTION
[FIG.22]
   502 TFC POINTER CONTROL SECTION
   510 TFCI CHECKING SECTION
   311 TFC POINTER STORAGE SECTION
   312 TFC POINTER DETERMINATION SECTION
[FIG.23]
   600 COMMUNICATION TERMINAL APPARATUS
   202 RECEPTION RADIO SECTION
   203 DESPREADING SECTION
   204 DEMODULATION SECTION
   205 CHANNEL DECODING SECTION
      RECEIVED DATA
      TRANSMIT DATA
   206 BUFFER
   207 CHANNEL CODING SECTION
   208 MODULATION SECTION
   209 SPREADING SECTION
   210 TRANSMISSION RADIO SECTION
   211 UP/DOWN/KEEP SIGNALING EXTRACTION SECTION
   401 TFC POINTER EXTRACTION SECTION
   402 TFC POINTER CONTROL SECTION
   403 TFC DETERMINATION SECTION
   214 POWER MARGIN/BUFFER INFORMATION GENERATION SECTION
   601 POINTER FLAG GENERATION SECTION
[FIG.24]
   ST50 START
   ST51 CHECK WHETHER TFC POINTER IS INCORRECT BASED ON POINTER FLAG SIGNAL SENT FROM MOBILE STATION
      INCORRECT
      NOT INCORRECT
   ST52 DETERMINE NEW TFC POINTER FROM PREVIOUS TFC POINTER
   ST53 TRANSMIT UP/DOWN/KEEP SIGNALING
   ST54 DETERMINE NEW TFC POINTER FROM PREVIOUS TFC POINTER
   ST55 TRANSMIT TFC POINTER
   ST56 END
[FIG.25]
   ST60 START
   ST61 UPDATE TFC POINTER IN ACCORDANCE WITH SENT UP/DOWN/KEEP SIGNALING
   ST62 TFC DETERMINATION
   ST63 TRANSMISSION USING TFC INDICATED BY TFC POINTER?
   ST64 SET POINTER FLAG SIGNAL TO 1
   ST65 SET POINTER FLAG SIGNAL TO -1
   ST66 TRANSMIT TFCI AND POINTER FLAG
   ST67 END
[FIG.26]
   MOBILE STATION
   BASE STATION
   t1
      DETERMINE TFC POINTER
      UP/DOWN/KEEP SIGNALING
   t2
      UPDATE TFC POINTER
      DETERMINE TFC FOR TRANSMISSION
   t3
      TFCI TRANSMISSION
      POINTER FLAG TRANSMISSION
   t4
      CHECK TFCI
      CHECK POINTER FLAG
   t5
      DETERMINE TFC POINTER
      UP/DOWN/KEEP SIGNALING
      TFC POINTER SIGNALING
      (WHEN TFC POINTER IS DETERMINED TO BE DIFFERENT)
   t6
      UPDATE TFC POINTER
      TIME
      TIME

## Claims

1. A radio communication method whereby a communication terminal apparatus sets a TFC (Transport Format Combination) pointer based on an up/down/keep signal from a radio base station apparatus, and performs uplink transmission based on a TFC indicating a transmission rate not exceeding this TFC pointer;
wherein TFC pointers of a communication terminal apparatus and radio base station apparatus are made to match using a TFCI (Transmit Format Combination Indicator) transmitted from said communication terminal apparatus.

2. The radio communication method according to claim 1, comprising:
a TFC determination step in which a communication terminal apparatus determines a TFC; a step in which said communication terminal apparatus makes its own TFC pointer match with a TFC determined in said TFC determination step;
a TFCI transmission step in which said communication terminal apparatus transmits a TFCI indicating a determined TFC to a radio base station apparatus;
a TFC pointer updating step in which said radio base station apparatus updates its own TFC pointer to a TFC indicated by a TFCI; and
a step in which said radio base station apparatus determines a new TFC pointer, generates an up/down/keep signal for controlling a TFC pointer of said communication terminal apparatus by comparing this new TFC pointer with said updated TFC pointer, and transmits this up/down/keep signal.

3. The radio communication method according to claim 1, further comprising:
a TFC determination step in which a communication terminal apparatus determines a TFC;
a TFCI transmission step in which said communication terminal apparatus transmits to a radio base station apparatus information constituting a basis for determining a TFC in addition to a TFCI indicating a determined TFC;
a step in which said radio base station apparatus determines whether or not a TFC pointer of said communication terminal apparatus is different from its own TFC pointer based on a TFC of said communication terminal apparatus and information constituting a basis thereof; and
a step in which, if said radio base station apparatus determines that a TFC pointer of said communication terminal apparatus is different, said radio base station apparatus transmits its own TFC pointer information to said communication terminal apparatus.

4. The radio communication method according to claim 1, further comprising:
a TFC determination step in which a communication terminal apparatus determines a TFC;
a step in which said communication terminal apparatus transmits to a radio base station apparatus a flag signal indicating whether or not a TFC pointer of said communication terminal apparatus itself and a TFC determined in said determination step match in addition to a TFCI indicating a determined TFC;
a step inwhich said radio base station apparatus determines whether or not a TFC pointer of said communication terminal apparatus is different from its own TFC pointer based on said TFCI and flag signal; and
a step in which, if said radio base station apparatus determines that a TFC pointer of said communication terminal apparatus is different, said radio base station apparatus transmits its own TFC pointer information to said communication terminal apparatus.

5. The radio communication method according to any one of claim 2 through claim 4, wherein said radio base station apparatus transmits a keep signal to said communication terminal apparatus in a period up to transmission of a signal for controlling a TFC pointer of said communication terminal apparatus after receiving a TFCI from said communication terminal apparatus.

6. A radio communication system whereby a communication terminal apparatus changes a TFC pointer based on an up/down/keep signal from a radio base station apparatus, selects a TFC that indicates a transmission rate not exceeding this TFC pointer, and performs uplink transmission based on said selected TFC; wherein:
said communication terminal apparatus transmits a TFCI indicating said selected TFC to said radio base station apparatus; and
said radio base station apparatus references a TFC indicated by said TFCI and generates a signal for changing a TFC pointer such as said up/down/keep signal or a TFC pointer information signal, and transmits this signal for changing a TFC pointer to said communication terminal apparatus.

7. A radio base station apparatus comprising:
a TFCI (Transmit Format Combination Indicator) extraction section that extracts a TFCI transmitted from a communication terminal apparatus;
an up/down/keep signal forming section that references an extracted TFCI and generates an up/down/keep signal for changing a TFC (Transport Format Combination) pointer of said communication terminal apparatus; and
a transmission section that performs radio transmission of said up/down/keep signal.

8. The radio base station apparatus according to claim 7, further comprising:
a TFCI checking section that checks whether or not a TFC pointer of said radio base station apparatus is different from a TFC indicated by said TFCI, and if a TFC pointer of said radio base station apparatus is different from a TFC indicated by said TFCI, updates a TFC pointer of said radio base station apparatus to a TFC indicated by said TFCI; and
a TFC pointer determination section that generates a control signal for generating said up/down/keep signal by comparing this updated TFC pointer with a new TFC pointer.

9. The radio base station apparatus according to claim 7, further comprising: a power margin/buffer information extraction section that extracts power margin information and/or buffer size information transmitted from a communication terminal apparatus;
a TFCI checking section that determines whether or not a TFC pointer of said communication terminal apparatus is different from a TFC pointer of said radio base station apparatus based on a TFC indicated by said TFCI and said power margin information and/or buffersizeinformation constituting a basis thereof; and
a TFC pointer transmission section that transmits TFC pointer information of said radio base station apparatus to said communication terminal apparatus if a TFC pointer of said radio base station apparatus is different from a TFC indicated by said TFCI.

10. The radio base station apparatus according to claim 7, further comprising:
a pointer flag extraction section that extracts a flag signal indicating whether or not a TFC pointer of a communication terminal apparatus transmitted from said communication terminal apparatus and a TFC determined by said communication terminal apparatus match;
a TFCI checking section that determines whether or not a TFC pointer of said communication terminal apparatus is different from a TFC pointer of said radio base station apparatus based on said TFCI and flag signal; and
a TFC pointer transmission section that transmits TFC pointer information of said radio base station apparatus to said communication terminal apparatus if a TFC pointer of said communication terminal apparatus is determined to be different.

11. A communication terminal apparatus comprising:
a TFC determination section that determines a TFC indicating a transmission rate not exceeding a TFC pointer;
a TFC pointer control section that updates a TFC pointer based on an up/down/keep signal from a radio base station apparatus and also performs updating by matching with a TFC determined by said TFC determination section; and
a TFCI transmission section that transmits a TFCI indicating a TFC determined by said TFC determination section to said radio base station apparatus.

12. A communication terminal apparatus comprising:
a TFC determination section that determines a TFC indicating a transmission rate not exceeding a TFC pointer;
a TFC comparison section that determines whether or not a TFC determined by said TFC determination section and a TFC pointer of said communication terminal apparatus match; and a transmission section that, if a determined TFC and a TFC pointer of said communication terminal apparatus do not match, transmits to a radio base station apparatus a TFCI indicating a TFC determined by said TFC determination section and also information constituting a basis for determining a TFC.

13. A communication terminal apparatus comprising:
a TFC determination section that determines a TFC indicating a transmission rate not exceeding a TFC pointer;
a TFC comparison section that determines whether or not a TFC determined by said TFC determination section and a TFC pointer of said communication terminal apparatus match; and
a transmission section that transmits to a radio base station apparatus a TFCI indicating a TFC determined by said TFC determination section and also a pointer flag signal indicating whether or not a determined TFC and a TFC pointer of said communication terminal apparatus match.
